# EUROPEAN PATENT APPLICATION

(11) **EP 4 380 025 A1**
(43) Date of publication of application: **05.06.2024**
(21) Application number: 21958696.3
(22) Date of filing: 28.09.2021
(51) Int. Cl.: H02M 1/42

(54) **CONTROL METHOD OF POWER FACTOR CORRECTION (PFC) CIRCUIT AND PFC CIRCUIT**

(71) Applicant: Huawei Technologies Co., Ltd., Shenzhen, Guangdong 518129 (CN)
(72) Inventor: ZHANG, Xijun, Shenzhen, Guangdong 518129 (CN); ZHANG, Xue, Shenzhen, Guangdong 518129 (CN); YAO, Jun, Shenzhen, Guangdong 518129 (CN); YANG, Qiya, Shenzhen, Guangdong 518129 (CN); LIANG, Hongfeng, Shenzhen, Guangdong 518129 (CN); GAO, Chao, Shenzhen, Guangdong 518129 (CN); LI, Yongchao, Shenzhen, Guangdong 518129 (CN)
(74) Representative: MERH-IP Matias Erny Reichl Hoffmann Patentanwälte PartG mbB
(86) International application number: PCT/CN2021/121486
(87) International publication number: WO 2023/050103

(57) **Abstract**

Embodiments of this application provide a power factor correction PFC circuit control method and a PFC circuit. The PFC circuit includes an alternating current module, a power factor correction module, a direct current module, and a control module. The power factor correction module includes a three-phase correction circuit connected in parallel, and any single-phase correction circuit includes at least a first inductor, a first bridge arm, a second bridge arm, a third bridge arm, and a fourth bridge arm. The control module determines that an alternating current on a single-phase input/output terminal is in a positive half cycle. The control module turns on or turns off switching transistors on the first bridge arm and the second bridge arm, to boost a first voltage at a first parallel connection point. The control module turns on a switching transistor on the third bridge arm when determining that the first voltage is equal to a voltage of a positive bus of the direct current module. According to the PFC circuit and the control method provided in this application, a switching loss of the PFC circuit can be effectively reduced, and performance of the PFC circuit can be improved.

## Description

### TECHNICAL FIELD

This application relates to the field of electronic circuits, and in particular, to a power factor correction PFC circuit control method and a PFC circuit.

### BACKGROUND

With continuous development of power electronic technologies and improvement of power requirements for electric devices, multiphase AC power supply developed based on single-phase AC power supply, especially three-phase AC power supply, gradually becomes a mainstream power supply solution. A power supply circuit of a current three-phase AC power supply circuit usually includes a power factor correction (power factor correction, PFC) circuit and a DC/DC converter (direct-current/direct-current converter). The PFC circuit is mainly configured to perform rectification and control an input current waveform and an input voltage waveform to be consistent, to improve a power factor. The DC/DC converter is a voltage converter that converts an input direct current voltage into a specified direct current voltage and outputs the specified direct current voltage, and is mainly configured to perform voltage adjustment on the direct current.

In the conventional technology, due to advantages such as high power density and easy power factor correction, a three-phase voltage-boosting (namely, boost) three-level PFC circuit has become a main solution to the PFC circuit of the three-phase AC power supply. For example, people often use a three-phase four-wire three-level PFC circuit and a three-phase virtual N three-level PFC circuit. However, the current three-phase voltage-boosting three-level PFC circuit performs rectification by using a diode, and a main transistor is turned on or off in a hard-switching manner. As a result, a turn-on loss and a switching loss of the current PFC circuit are large, and overall performance of the PFC circuit is poor.

### SUMMARY

This application provides a power factor correction PFC circuit control method and a PFC circuit, to reduce a turn-on loss and a switching loss of the PFC circuit, and improve performance of the PFC circuit.

According to a first aspect, an embodiment of this application provides a PFC circuit control method. The PFC circuit includes an alternating current module, a power factor correction module, a direct current module, and a control module. The power factor correction module includes a three-phase correction circuit connected in parallel, and any single-phase correction circuit in the three-phase correction circuit includes at least a first inductor, a first bridge arm, a second bridge arm, a third bridge arm, and a fourth bridge arm. One end of the first inductor is connected to a single-phase input/output terminal of the alternating current module, the other end of the first inductor is connected to a first bridge arm midpoint of the first bridge arm, and the first bridge arm is connected in parallel to the second bridge arm. A first parallel connection point between the first bridge arm and the second bridge arm is connected to one end of the third bridge arm, and the other end of the third bridge arm is connected to a positive bus of the direct current module. A second parallel connection point between the first bridge arm and the second bridge arm is connected to one end of the fourth bridge arm, the other end of the fourth bridge arm is connected to a negative bus of the direct current module, and a midpoint or an imaginary midpoint of the alternating current module is further connected to a second bridge arm midpoint of the second bridge arm and the direct current module.

In actual application, the control module determines that an alternating current on the single-phase input/output terminal is in a positive half cycle. The control module turns on or turns off switching transistors on the first bridge arm and the second bridge arm, to boost a first voltage at the first parallel connection point. The control module turns on a switching transistor on the third bridge arm when determining that the first voltage is equal to a voltage of the positive bus of the direct current module.

It should be understood that, with reference to the foregoing implementation, the PFC circuit may turn on or turn off the switching transistors on the first bridge arm and the second bridge arm by using the control module, and then the first voltage at the first parallel connection point is boosted by using a freewheeling function of the first inductor. Then, the control module may turn on the switching transistor on the third bridge arm when determining that a boosted first voltage is equal to the voltage of the positive bus of the direct current module. In this way, zero voltage turn-on of the switching transistor on the third bridge arm can be implemented, and a switching loss of the PFC circuit can be effectively reduced, and performance of the PFC circuit is further improved.

With reference to the first aspect, in an optional implementation, the first bridge arm includes a first switching transistor and a second switching transistor, the second bridge arm includes a third switching transistor and a fourth switching transistor, the third bridge arm includes a fifth switching transistor, and the fourth bridge arm includes a sixth switching transistor. The first bridge arm midpoint of the first bridge arm is a connection point between a first end of the first switching transistor and a second end of the second switching transistor, the first parallel connection point is a connection point between a second end of the first switching transistor and a first end of the third switching transistor, the second parallel connection point between the first bridge arm and the second bridge arm is a connection point between the second end of the second switching transistor and a first end of the fourth switching transistor, the second bridge arm midpoint of the second bridge arm is a connection point between a second end of the third switching transistor and a second end of the fourth switching transistor, a first end of the fifth switching transistor is connected to the first parallel connection point, a second end of the fifth switching transistor is connected to the positive bus, a first end of the sixth switching transistor is connected to the second parallel connection point, and a second end of the sixth switching transistor is connected to the negative bus. In addition, third ends of the first switching transistor, the second switching transistor, the third switching transistor, the fourth switching transistor, the fifth switching transistor, and the sixth switching transistor are connected to the control module.

Compared with an existing PFC circuit implemented by using a diode, in the foregoing implementation, bridge arms included in the PFC circuit are implemented by using a plurality of switching transistors. Therefore, a turn-on voltage drop and a turn-on loss are smaller.

With reference to the first aspect, in an optional implementation, after turning on the fifth switching transistor, the control module turns off the fifth switching transistor if determining that a current of the first inductor is equal to a first preset current.

With reference to the first aspect, in an optional implementation, the control module may control the first switching transistor to be turned on in the positive half cycle. The control module turns on the third switching transistor when determining that a first preset moment expires or determining that a voltage at the first parallel connection point is equal to a voltage at the second bridge arm midpoint. The control module turns off the third switching transistor when determining that the current of the first inductor is equal to a second preset current, to boost the first voltage at the first parallel connection point.

In the foregoing implementation, the control module may turn on the third switching transistor when determining that the voltage at the first parallel connection point is equal to the voltage at the second bridge arm midpoint. In this way, zero voltage turn-on of the third switching transistor is implemented, and a switching loss of the PFC circuit can be reduced.

With reference to the first aspect, in an optional implementation, the control module controls the first switching transistor and the fourth switching transistor to be turned on in the positive half cycle. The control module turns on the second switching transistor and the third switching transistor when determining that a first preset moment expires or determining that a voltage at the first parallel connection point is equal to a voltage at the second bridge arm midpoint. The control module turns off the second switching transistor and the third switching transistor when determining that the current of the first inductor is equal to a second preset current, to boost the first voltage at the first parallel connection point.

In the foregoing implementation, a switching loss of the PFC circuit is reduced. In addition, because a parallel loop is established between the first bridge arm midpoint and the second bridge arm midpoint, an equivalent resistance value between the first bridge arm midpoint and the second bridge arm midpoint becomes smaller. This can further reduce a turn-on loss of the PFC circuit.

With reference to the first aspect, in an optional implementation, the control module controls the first switching transistor and the fourth switching transistor to be turned on in the positive half cycle. The control module turns on the third switching transistor when determining that a first preset moment expires or determining that a voltage at the first parallel connection point is equal to a voltage at the second bridge arm midpoint. The control module turns on the second switching transistor when determining that first preset duration expires. A start moment of the first preset duration is a turn-on moment of the third switching transistor. The control module turns off the second switching transistor when determining that second preset duration expires. A start moment of the second preset duration is a turn-on moment of the second switching transistor. The control module turns off the third switching transistor when determining that the current of the first inductor is equal to a second preset current, to boost the first voltage at the first parallel connection point.

In the foregoing implementation, zero voltage turn-on and zero voltage turn-off of the second switching transistor can be implemented while zero voltage turn-on of the third switching transistor is implemented. This can further reduce a switching loss of the PFC point. In addition, a parallel loop is further established between the first bridge arm midpoint and the second bridge arm midpoint. This can further reduce a turn-on loss of the PFC circuit.

With reference to the first aspect, in an optional implementation, the control module determines that the alternating current on the single-phase input/output terminal is in a negative half cycle. The control module may turn on or turn off the switching transistors on the first bridge arm and the second bridge arm, to buck a second voltage at the second parallel connection point. The control module turns on the sixth switching transistor when determining that the second voltage is equal to a voltage of the negative bus of the direct current module.

In the foregoing implementation, zero voltage turn-on of the sixth switching transistor is implemented in the negative half cycle. This can further reduce a switching loss of the PFC circuit.

With reference to the first aspect, in an optional implementation, after turning on the sixth switching transistor, the control module turns off the sixth switching transistor if determining that the current of the first inductor is equal to a third preset current.

With reference to the first aspect, in an optional implementation, the control module controls the second switching transistor to be turned on in the negative half cycle. The control module turns on the fourth switching transistor when determining that a second preset moment expires or determining that a voltage at the second parallel connection point is equal to the voltage at the second bridge arm midpoint. The control module turns off the fourth switching transistor when determining that the current of the first inductor is equal to a fourth preset current, to buck the second voltage at the second parallel connection point.

In the foregoing implementation, the control module may implement zero voltage turn-on of the fourth switching transistor in the negative half cycle. This can further reduce a switching loss of the PFC circuit.

With reference to the first aspect, in an optional implementation, the control module controls the second switching transistor and the third switching transistor to be turned on in the negative half cycle. The control module turns on the first switching transistor and the fourth switching transistor when a second preset moment expires or a voltage at the second parallel connection point is equal to the voltage at the second bridge arm midpoint. The control module turns off the first switching transistor and the fourth switching transistor when determining that the current of the first inductor is equal to a fourth preset current, to buck the second voltage at the second parallel connection point.

In the foregoing implementation, the control module may implement zero voltage turn-on of the first switching transistor and the fourth switching transistor in the negative half cycle, and further establish a parallel loop between the first bridge arm midpoint and the second bridge arm midpoint. This can reduce a switching loss of the PFC circuit and a turn-on loss of the PFC circuit.

With reference to the first aspect, in an optional implementation, the control module controls the second switching transistor and the third switching transistor to be turned on in the negative half cycle. The control module turns on the fourth switching transistor when determining that a second preset moment expires or determining that a voltage at the second parallel connection point is equal to the voltage at the second bridge arm midpoint. The control module turns on the first switching transistor when determining that third preset duration expires. A start moment of the third preset duration is a turn-on moment of the fourth switching transistor. The control module turns off the first switching transistor when determining that fourth preset duration expires. A start moment of the fourth preset duration is a turn-on moment of the first switching transistor. The control module turns off the fourth switching transistor when determining that the current of the first inductor is equal to a fourth preset current, to buck the second voltage at the second parallel connection point.

In the foregoing implementation, the control module may implement zero voltage turn-on of the first switching transistor and the fourth switching transistor and zero voltage turn-off of the first switching transistor in the negative half cycle, and further establish a parallel loop between the first bridge arm midpoint and the second bridge arm midpoint. This can reduce a switching loss of the PFC circuit and a turn-on loss of the PFC circuit.

According to a second aspect, an embodiment of this application provides a PFC circuit. The PFC circuit includes an alternating current module, a power factor correction module, a direct current module, and a control module. The power factor correction module includes a three-phase correction circuit connected in parallel, any phase correction circuit in the three-phase correction circuit includes at least a first inductor, a first bridge arm, a second bridge arm, a third bridge arm, and a fourth bridge arm. One end of the first inductor is connected to a first phase terminal of the alternating current module, the other end of the first inductor is connected to a first bridge arm midpoint of the first bridge arm, the first bridge arm is connected in parallel to the second bridge arm, a first parallel connection point between the first bridge arm and the second bridge arm is connected to one end of the third bridge arm, the other end of the third bridge arm is connected to a positive bus of the direct current module, a second parallel connection point between the first bridge arm and the second bridge arm is connected to one end of the fourth bridge arm, the other end of the fourth bridge arm is connected to a negative bus of the direct current module, a midpoint or an imaginary midpoint of the alternating current module is further connected to a second bridge arm midpoint of the second bridge arm and the direct current module, and the first bridge arm, the second bridge arm, the third bridge arm, and the fourth bridge arm each include one or more switching transistors. The control module is configured to control turn-on or turn-off of switching transistors in the first bridge arm, the second bridge arm, the third bridge arm, and the fourth bridge arm. The power factor correction module is configured to convert a three-phase alternating current provided by the alternating current module into a direct current and transmit the direct current to the direct current module, or configured to convert a direct current provided by the direct current module into a three-phase alternating current and transmit the three-phase alternating current to the alternating current module.

With reference to the second aspect, in an optional implementation, the first bridge arm includes a first switching transistor and a second switching transistor connected in series, the second bridge arm includes a third switching transistor and a fourth switching transistor connected in series, the third bridge arm includes a fifth switching transistor, and the fourth bridge arm includes a sixth switching transistor. The first bridge arm midpoint of the first bridge arm is a connection point between a first end of the first switching transistor and a second end of the second switching transistor, the first parallel connection point is a connection point between a second end of the first switching transistor and a first end of the third switching transistor, the second parallel connection point between the first bridge arm and the second bridge arm is a connection point between the second end of the second switching transistor and a first end of the fourth switching transistor, the second bridge arm midpoint of the second bridge arm is a connection point between a second end of the third switching transistor and a second end of the fourth switching transistor, a first end of the fifth switching transistor is connected to the first parallel connection point, a second end of the fifth switching transistor is connected to the positive bus, a first end of the sixth switching transistor is connected to the second parallel connection point, and a second end of the sixth switching transistor is connected to the negative bus. In addition, third ends of the first switching transistor, the second switching transistor, the third switching transistor, the fourth switching transistor, the fifth switching transistor, and the sixth switching transistor are connected to the control module.

According to a third aspect, an embodiment of this application provides a three-phase power supply system. The three-phase power supply system includes a three-phase alternating current source, the PFC circuit according to any one of the second aspect, a DC/DC converter, and a direct current load. The three-phase alternating current source is connected to an input side of the PFC circuit, an output side of the PFC circuit is connected to an input side of the DC/DC converter, and an output side of the DC/DC converter is connected to the direct current load. The three-phase alternating current source is configured to provide a three-phase alternating current. The PFC circuit is configured to perform the control method according to any one of the foregoing first aspect, to convert the three-phase alternating current into a direct current with a first voltage value. The DC/DC converter is configured to convert the direct current with the first voltage value into a direct current with a second voltage value, and transmit the direct current with the second voltage value to the direct current load, so that the direct current load works normally.

According to the PFC circuit and control method provided in embodiments of this application, a turn-on loss and a switching loss of the PFC circuit can be reduced, and performance of the PFC circuit can be improved.

### BRIEF DESCRIPTION OF DRAWINGS

FIG. 1 is a schematic diagram of a structure of a three-phase power supply system according to an embodiment of this application;
FIG. 2 is a schematic diagram of a structure of a PFC circuit according to an embodiment of this application;
FIG. 3 is a schematic diagram of another structure of a PFC circuit according to an embodiment of this application;
FIG. 4 is a schematic diagram of a structure of a control module according to an embodiment of this application;
FIG. 5 is a schematic diagram of another structure of a PFC circuit according to an embodiment of this application;
FIG. 6 is a schematic diagram of another structure of a PFC circuit according to an embodiment of this application;
FIG. 7 is a schematic flowchart of a PFC circuit control method according to an embodiment of this application;
FIG. 8 is a schematic diagram of a circuit status according to an embodiment of this application;
FIG. 9 is a schematic diagram of another circuit status according to an embodiment of this application;
FIG. 10 is a schematic diagram of another circuit status according to an embodiment of this application;
FIG. 11 is a schematic diagram of another circuit status according to an embodiment of this application;
FIG. 12 is another schematic flowchart of a PFC circuit control method according to an embodiment of this application;
FIG. 13 is a schematic diagram of a waveform according to an embodiment of this application;
FIG. 14 is a schematic diagram of another waveform according to an embodiment of this application;
FIG. 15 is another schematic flowchart of a PFC circuit control method according to an embodiment of this application;
FIG. 16 is another schematic flowchart of a PFC circuit control method according to an embodiment of this application;
FIG. 17 is a schematic diagram of another waveform according to an embodiment of this application; and
FIG. 18 is a schematic diagram of another waveform according to an embodiment of this application.

### DESCRIPTION OF EMBODIMENTS

The following clearly and completely describes technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Existing circuits such as a three-phase four-wire three-level PFC circuit and a three-phase virtual N three-level PFC circuit perform rectification by using a diode, and turn-on and turn-off of a main transistor in the circuit are controlled in a hard-switching manner. As a result, a turn-on loss and a switching loss of the PFC circuit are large, and overall performance of the PFC circuit is poor.

Therefore, the technical problem to be resolved in this application is how to reduce a turn-on loss and/or a switching loss of a PFC circuit, to improve performance of the PFC circuit.

Embodiments of this application provide a PFC circuit control method and a PFC circuit. A switching loss and a turn-on loss of the PFC circuit can be reduced, and performance of the PFC circuit can be effectively improved by using the control method and the PFC circuit.

It should be noted that the PFC circuit control method and the PFC circuit provided in embodiments of this application may be used in an alternating current power supply scenario, or may be used in a direct current power supply scenario. In the alternating current power supply scenario, when the PFC circuit inputs an alternating current whose effective value is a third voltage value (which is assumed to be V3 herein), the PFC circuit is configured to implement rectification and voltage boosting while implementing power factor correction, to output a direct current with a first voltage value (which is assumed to be V1 herein). The first voltage value V1 is greater than the third voltage value V3. In the direct current power supply scenario, when the PFC circuit inputs a direct current with a first voltage value V1, the PFC circuit is configured to implement inversion and voltage bucking, to output an alternating current whose effective value is a third voltage value V3.

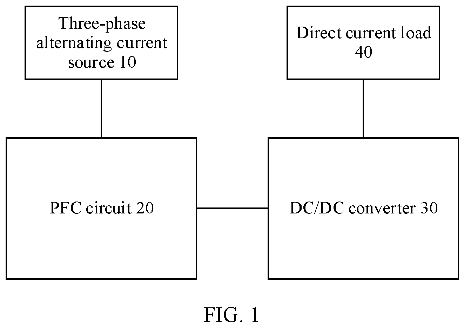

For example, FIG. 1 is a schematic diagram of a structure of a three-phase power supply system according to an embodiment of this application. The three-phase power supply system includes a three-phase alternating current source 10, a PFC circuit 20, a DC/DC converter 30, and a direct current load 40. As shown in FIG. 1, an input side of the PFC circuit 20 is connected to the three-phase alternating current source 10, and an output side of the PFC circuit 20 is connected to an input side of the DC/DC converter 30. An output side of the DC/DC converter 30 is connected to the direct current load 40. An alternating current power supply scenario is used as an example. In actual working, the three-phase alternating current source 10 may provide an alternating current whose effective value is a third voltage value V3 for the PFC circuit 20. According to the PFC circuit control method provided in this application, the PFC circuit 20 may perform voltage boosting and rectification on the alternating current to obtain a direct current with a first voltage value V1, and then provide the direct current with the first voltage value V1 to the DC/DC converter 30. The DC/DC converter 30 converts the input direct current into a direct current with a second voltage value (which is assumed to be V2 herein) required by the direct current load 40, and provides the direct current with the second voltage value to the direct current load 40, so that the direct current load 40 can work normally.

In actual application, the three-phase alternating current source 10 may be a device that provides an alternating current for the PFC circuit 20, for example, a home transformer, a home meter, or a DC/AC converter (direct-current /alternating current converter). The direct current load 40 may be an energy storage battery (for example, a nickel-cadmium battery, a nickel-hydrogen battery, a lithium-ion battery, or a lithium polymer battery), a solar cell, or another DC/DC converter (for example, a BUCK converter, a BOOST converter, or a BUCK-BOOST converter). The direct current load 40 may alternatively be an artificial intelligence chip, an image processor, a mobile phone terminal, a photovoltaic inverter, an electric vehicle, or the like. Implementation forms of the three-phase alternating current source 10 and the direct current load 40 are not specifically limited in this application.

It should be understood that the foregoing is merely an example of a usage scenario of the PFC circuit provided in this application, and is not exhaustive. The PFC circuit provided in this embodiment of this application may be further used in another power supply scenario in which rectification or inversion needs to be performed.

Herein, the structure and the control method of the PFC circuit provided in this application are the same in both the direct current power supply scenario and the alternating current power supply scenario. Therefore, the following describes in detail the structure and the control method of the PFC circuit provided in this application by using an example in which the PFC circuit works in the alternating current power supply scenario (to be specific, the alternating current whose effective value is the third voltage value V3 is input and the direct current with the first voltage value V1 is output).

To facilitate description of the PCF circuit control method provided in this application, the following first describes the structure of the PFC circuit provided in this embodiment of this application.

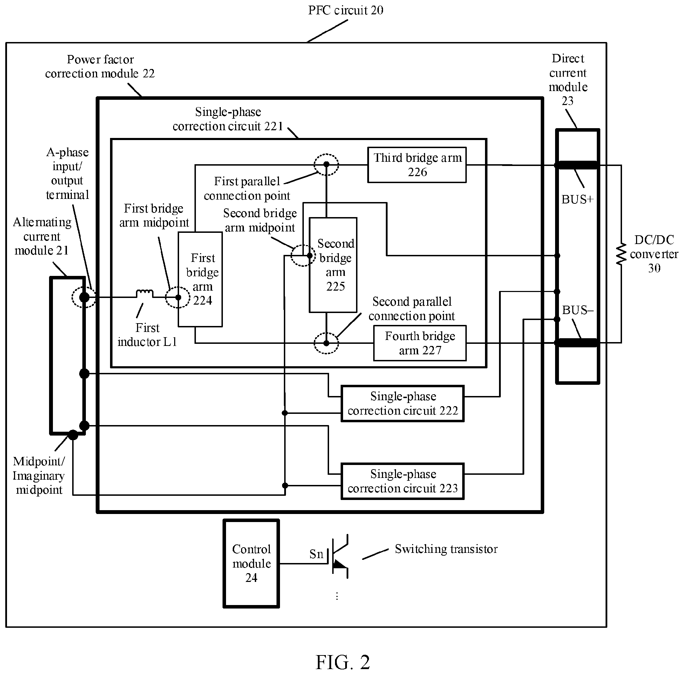

FIG. 2 is a schematic diagram of a structure of a PFC circuit according to an embodiment of this application. As shown in FIG. 2, the PFC circuit 20 may include an alternating current module 21, a power factor correction module 22, a direct current module 23, and a control module 24. The power factor correction module 22 may include a three-phase correction circuit connected in parallel, namely, a single-phase correction circuit 221, a single-phase correction circuit 222, and a single-phase correction circuit 223. Each single-phase correction circuit in the foregoing three-phase correction circuit includes at least one inductor and four bridge arms. Because structures of all single-phase correction circuits are the same, and the three single-phase circuits are connected in parallel between the alternating current module 21 and the direct current module 23 in a same connection manner, the following further describes a specific structure of the PFC circuit 20 by using the single-phase correction circuit 221 as an example.

Still refer to FIG. 2. The single-phase correction circuit 221 may specifically include a first inductor L1, a first bridge arm 224, a second bridge arm 225, a third bridge arm 226, and a fourth bridge arm 227. One single-phase input/output terminal (for ease of differentiation, an A-phase input/output terminal is used as a replacement for description below) in three single-phase input/output terminals of the alternating current module 21 is connected to one end of the first inductor L1. The other end of the first inductor L1 is connected to a bridge arm midpoint of the first bridge arm 224 (for ease of differentiation, a first bridge arm midpoint is used as a replacement for description below). It should be noted herein that the bridge arm midpoint in this embodiment of this application is mainly a symmetry point of the bridge arm. For example, it is assumed that the bridge arm includes two switching transistors connected in series, a connection point between the two switching transistors connected in series is the bridge arm midpoint of the bridge arm. Similarly, if the bridge arm includes four switching transistors connected in series, a connection point between two switching transistors, located on an inner side, in the four switching transistors connected in series is the bridge arm midpoint of the bridge arm. The first bridge arm 224 and the second bridge arm 225 are connected in parallel. In addition, a parallel connection point (which is replaced with a first parallel connection point below) between the first bridge arm 224 and the second bridge arm 225 is connected to one end of the third bridge arm 226, and another parallel connection point (which is replaced with a second parallel connection point below) between the first bridge arm 224 and the second bridge arm 225 is connected to one end of the fourth bridge arm 227. It should be noted herein that the parallel connection point in this embodiment of this application mainly means a connection that enables two bridge arms to be connected in parallel. For example, it is assumed that a first end of a bridge arm 1 is connected to a first end of a bridge arm 2, and a second end of the bridge arm 1 is also connected to a second end of the bridge arm 2, so that the bridge arm 1 and the bridge arm 2 are connected in parallel. In this case, it is assumed that the connected first end and the connected second end between the bridge arm 1 and the bridge arm 2 are two parallel connection points. The other end of the third bridge arm 226 is connected to a positive bus (namely, BUS+) of the direct current module 23, and the other end of the fourth bridge arm 227 is connected to a negative bus (namely, BUS-) of the direct current module 23. A midpoint or an imaginary midpoint of the alternating current module 21 is connected to the second bridge arm midpoint and the direct current module 23. The control module 24 is further separately connected to third ends of switching transistors included in the first bridge arm 224, the second bridge arm 225, the third bridge arm 226, and the fourth bridge arm 227.

It should be noted herein that, in this embodiment of this application, the midpoint (which also referred to as a neutral point) of the alternating current module 21 is a point in a winding of a transformer or a generator corresponding to the alternating current module 21, and absolute values of voltages between this point and input/output terminals of each phase of the alternating current module 21 are equal. The imaginary midpoint (which also referred to as a virtual neutral point) of the alternating current module 21 is a common connection point at which the input/output terminals of each phase of the alternating current module 21 are connected together through a corresponding capacitor, and absolute values of voltages between the common connection point and the input/output terminals of each phase of the alternating current module 21 are equal.

In actual working, the first inductor L1, the first bridge arm 224, the second bridge arm 225, the third bridge arm 226, and the fourth bridge arm 227 in the single-phase correction circuit 221 form a boost rectifier circuit. The first bridge arm 224 is a low-frequency rectification function area, the second bridge arm 225 is a high-frequency rectification function area, and the third bridge arm 226 and the fourth bridge arm 227 are used as freewheeling transistors. Under control of the switching transistors in the first bridge arm 224, the second bridge arm 225, the third bridge arm 226, and the fourth bridge arm 227 by using the control module 24, the single-phase correction circuit 221 may perform voltage boosting and rectification on a single-phase alternating current (which is assumed to be an A-phase alternating current herein) of a third voltage value V3 flowing from the first inductor L1, and output a direct current of a first voltage value V1 to the direct current module 23. A voltage of the positive bus of the direct current module 23 is +(V1/2), and a voltage of the negative bus is -(V1/2), that is, a voltage drop value between the positive bus and the negative bus is V1.

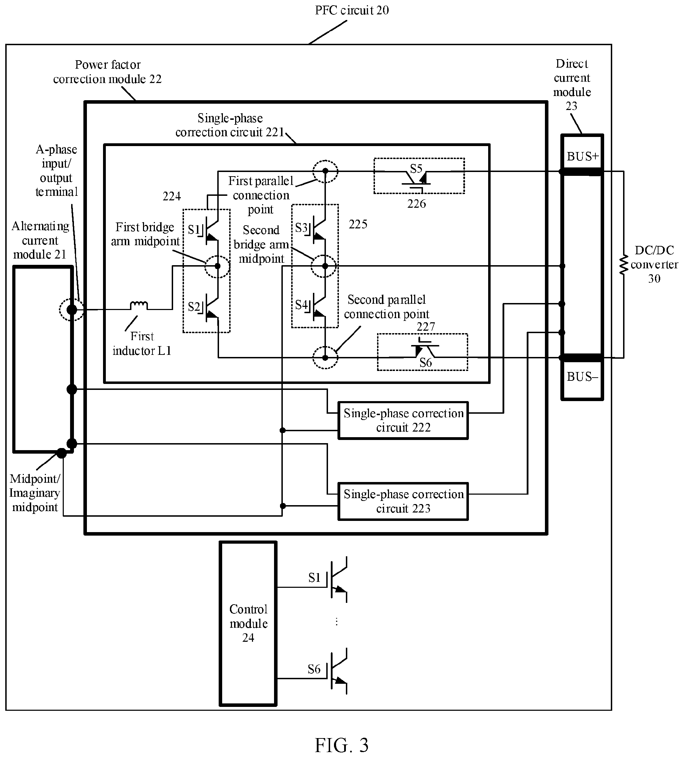

Further, FIG. 3 is a schematic diagram of another structure of the PFC circuit according to an embodiment of this application. As shown in FIG. 3, the first bridge arm 224 may specifically include a first switching transistor S 1 and a second switching transistor S2 connected in series, the second bridge arm 225 may specifically include a third switching transistor S3 and a fourth switching transistor S4 connected in series, and the third bridge arm may specifically include a fifth switching transistor S5, and the fourth switching transistor may specifically include a sixth switching transistor S6. The first bridge arm midpoint of the first bridge arm 224 is a connection point between a first end of the first switching transistor S 1 and a second end of the second switching transistor S2, and the first parallel connection point is a connection point between a second end of the first switching transistor S1 and a first end of the third switching transistor S3. The second parallel connection point between the first bridge arm 224 and the second bridge arm 225 is a connection point between the second end of the second switching transistor S2 and a first end of the fourth switching transistor S4. The second bridge arm midpoint of the second bridge arm 225 is a connection point between a second end of the third switching transistor S3 and a second end of the fourth switching transistor S4. A first end of the fifth switching transistor S5 is connected to the first parallel connection point, a second end of the fifth switching transistor S5 is connected to the positive bus BUS+, a first end of the sixth switching transistor S6 is connected to the second parallel connection point, and a second end of the sixth switching transistor S6 is connected to the negative bus BUS-. Third ends of the first switching transistor S1, the second switching transistor S2, the third switching transistor S3, the fourth switching transistor S4, the fifth switching transistor S5, and the sixth switching transistor S6 are separately connected to the control module 24. The second bridge arm midpoint formed by the second end of the third switching transistor S3 and the second end of the fourth switching transistor S4 is connected to the midpoint or the imaginary midpoint provided by the alternating current module 21. The control module 24 may control turn-on or turn-off of each switching transistor by using a third end of each switching transistor. Therefore, the third end of each switching transistor may also be understood as a control end of each switching transistor.

Optionally, the direct current module 23 may further include a first capacitor C1 and a second capacitor C2 connected in series. A first end of the first capacitor C1 and a first end of the second capacitor C2 are simultaneously connected to the midpoint or the imaginary midpoint provided by the alternating current module 21. A second end of the first capacitor C1 is connected to the positive bus BUS+. A second end of the second capacitor C2 is connected to the negative bus BUS-. In actual application, the first end of the first capacitor C1 and the second capacitor C2 are used as energy storage devices in the direct current module 23. When the entire PFC circuit reaches a steady state, voltages at both ends of the first capacitor C1 and the second capacitor are steady at V1/2, so that a steady voltage drop of V1 exists between the positive bus BUS+ and the negative bus BUS-.

Optionally, the alternating current module 21 may specifically include a first alternating current source 2101, a second alternating current source 2102, and a third alternating current source 2103. A first end of the first alternating current source 2101, a first end of the second alternating current source 2102, and a first end of the third alternating current source 2103 are connected, and are used as the midpoint. A second end of the first alternating current source 2101 is connected to the first inductor L1 as the A-phase input/output terminal. A second end of the second alternating current source 2102, as another phase input/output terminal (which is assumed to be a B-phase input/output terminal herein) of the alternating current module 21, is connected to an inductor (for ease of differentiation, a second inductor L2 is used as a replacement for description below) in the single-phase correction circuit 222. A second end of the third alternating current source 2103, as another phase input/output terminal (it is assumed to be a C-phase input/output terminal herein) of the alternating current module 21, is connected to an inductor (for ease of differentiation, a third inductor L2 is used as a replacement for description below) in the single-phase correction circuit 223.

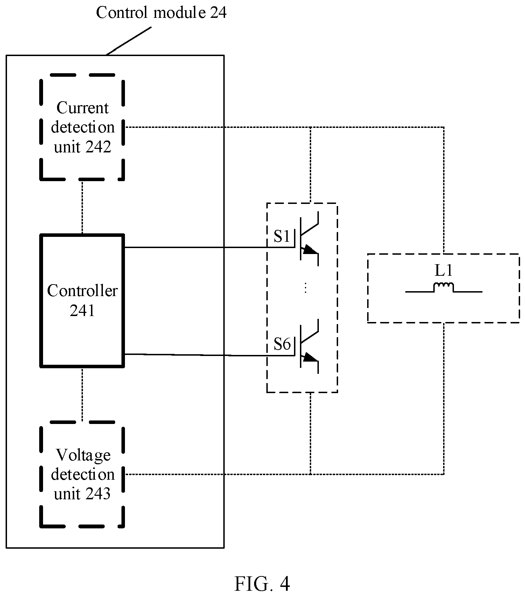

Optionally, FIG. 4 is a schematic diagram of a structure of a control module according to an embodiment of this application. As shown in FIG. 4, the control module 24 may specifically include a controller 241, a current detection unit 242, and/or a voltage detection unit 243. The controller 241 is connected to control ends of switching transistors (namely, the switching transistors in the first bridge arm 224, the second bridge arm 225, the third bridge arm 226, and the fourth bridge arm 227) included in each single-phase correction circuit, and the control module 24 may control, by using the controller 241, turn-on or turn-off of the switching transistors included in each single-phase correction circuit. The controller 241 is further separately connected to the current detection unit 242 and the voltage detection unit 243. The current detection unit 242 is further connected to one end of the first inductor in each single-phase correction circuit. The current detection unit 242 is configured to detect a current flowing through the first inductor connected to the current detection unit 242, and provide a corresponding current detection result to the controller 241. The voltage detection unit 243 is further separately connected to two ports other than the control end of any switching transistor on which voltage detection needs to be performed in each single-phase circuit. The voltage detection unit 243 is configured to detect a voltage between the two ports other than the control end of the any switching transistor, and provide a corresponding voltage detection result to the controller 241. The controller 241 may be configured to control, based on the current detection result and/or the voltage detection result, turn-on or turn-off of the switching transistors included in the single-phase correction circuits.

The following uses the single-phase correction circuit 221 as an example. It is assumed that the first inductor L1 needs to perform current detection, and the third switching transistor S3 needs to perform voltage detection. In specific implementation, gates of the first switching transistor S1, the second switching transistor S2, the third switching transistor S3, the fourth switching transistor S4, the fifth switching transistor S5, and the sixth switching transistor S6 are separately connected to the controller 241. One end of the current detection unit 242 is connected to one end of the first inductor L1, and the other end is connected to the controller 241. One end of the voltage detection unit 243 is connected to the controller 241, and the other two ends are respectively connected to the drain and the source of the third switching transistor S3. In actual working, the current detection unit 242 may detect a current flowing through the first inductor L1, and provide a detection result to the controller 241. The voltage detection unit 243 may detect a voltage value between the source and the drain of the third switching transistor S3, and provide the voltage value to the controller 241.

It should be understood that the foregoing describes a connection relationship between the current detection unit 242 and the voltage detection unit 243 and a corresponding function by using only an inductor or a switching transistor in the single-phase correction circuit 221 as an example. In actual implementation, the current detection unit 242 may alternatively be connected to inductors in the single-phase correction circuit 222 and the single-phase correction circuit 223, and implement a corresponding current detection function. Similarly, the voltage detection unit 243 may alternatively be connected to switching transistors in the single-phase correction circuit 222 and the single-phase correction circuit 223, and implement a corresponding voltage detection function. It should be understood herein that different application manners of the current detection unit 242 and the voltage detection unit 243 in the PFC circuit provided in this application may be directly deduced from the examples provided above. Details are not described in this application again.

It should be noted that, when current detection or voltage detection does not need to be performed, the control module 24 may not include the current detection unit 242 or the voltage detection unit 243. In other words, whether the control module 24 includes the current detection unit 242 or the voltage detection unit 243 may be set based on an actual application requirement. This is not specifically limited in this application.

It should be further noted that the switching transistor in the PFC circuit provided in this application may be specifically an insulated gate device, for example, an insulated gate bipolar transistor (insulated gate bipolar transistor, IGBT) or a metal-oxide semiconductor field-effect transistor (metal-oxide-semiconductor field-effect transistor, MOSFET). These switching transistors may alternatively be wide-bandgap semiconductor devices, such as silicon carbide and gallium nitride. This is not specifically limited in this application. The controller 241 in the PFC circuit provided in this application may include a discrete component or a logic device, for example, a complex programmable logic device (complex programmable logic device, CPLD), a field-programmable gate array (filed-programmable gate array, FPGA), a single-chip microcomputer, or a digital signal processor (digital signal processor, DSP). This is not specifically limited in this application.

The foregoing describes the structure of the PFC circuit provided in this application by using the single-phase correction circuit 221 as an example. It may be understood herein that structures and functions of the single-phase correction circuit 222 and the single-phase correction circuit 223 are the same as those of the single-phase correction circuit 221, and a difference lies in that the single-phase correction circuit 222 and the single-phase correction circuit 223 separately input two single-phase alternating currents (namely, the B-phase alternating current and the C-phase alternating current described above) other than the A-phase alternating current in the three-phase alternating currents provided by the alternating current module 21. Under control of the control module 24, the single-phase correction circuit 222 can convert the input B-phase alternating current into a direct current with the first voltage value V1, and output the direct current to the positive bus and the negative bus of the direct current module 23. Similarly, under control of the control module 24, the single-phase correction circuit 223 can also convert the input C-phase alternating current into a direct current with the first voltage value V1, and output the direct current to the positive bus and the negative bus of the direct current module 23. In actual implementation, structures of the single-phase correction circuit 222 and the single-phase correction circuit 223 are the same as the structure of the single-phase correction circuit 221, and connection relationships between components included in the single-phase correction circuit 222 and the single-phase correction circuit 223 are also the same as those of the single-phase correction circuit 221.

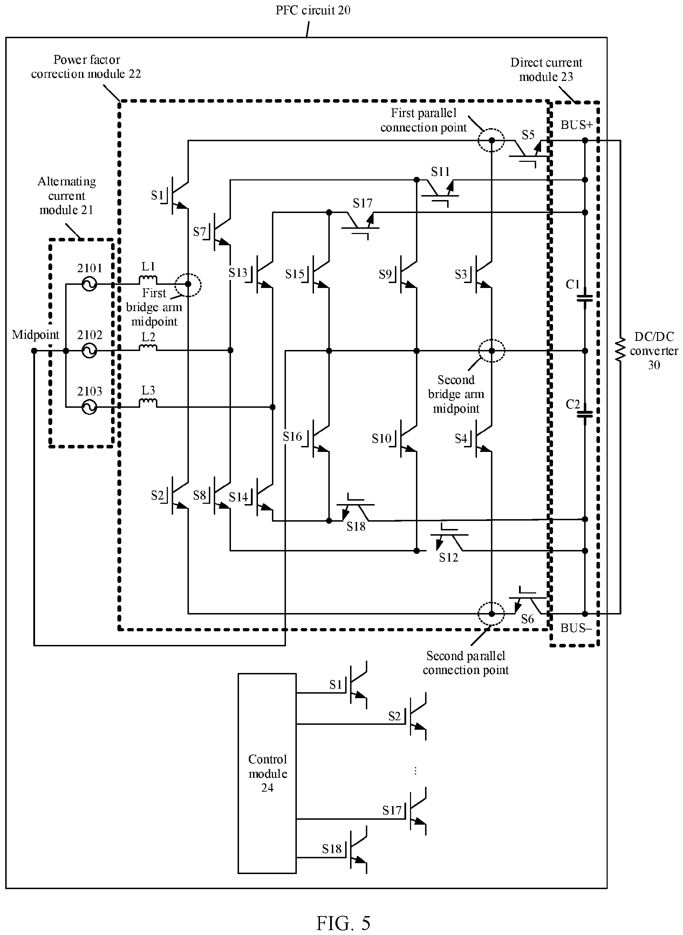

For example, FIG. 5 is a schematic diagram of another structure of the PFC circuit according to an embodiment of this application. Herein, FIG. 5 is a schematic diagram of a complete structure of the PFC circuit according to an embodiment of this application. As shown in FIG. 5, the single-phase correction circuit 222 may alternatively include one inductor and four bridge arms (it is assumed herein that a fifth bridge arm, a sixth bridge arm, a seventh bridge arm, and an eighth bridge arm are included), and the inductor may be a second inductor L2. The fifth bridge arm may include a seventh switching transistor S7 and an eighth switching transistor S8 connected in series, the sixth bridge arm may include a ninth switching transistor S9 and a tenth switching transistor S10 connected in series, the seventh bridge arm may include an eleventh switching transistor S11, and the eighth bridge arm may include a twelfth switching transistor S12. Herein, similar to the single-phase correction circuit 221, a first end of the seventh switching transistor S7 is connected to a first end of the eighth switching transistor S8, a second end of the seventh switching transistor S7 is connected to a first end of the eleventh switching transistor S11, and a second end of the eleventh switching transistor S11 is connected to the positive bus BUS+ of the direct current module 23. A second end of the eighth switching transistor S8 is connected to a first end of the twelfth switching transistor S12, and a second end of the twelfth switching transistor S 12 is connected to the negative bus BUS- of the direct current module 23. A first end of the ninth switching transistor S9 is connected to a first end of the tenth switching transistor S10, a second end of the ninth switching transistor S9 is connected to the first end of the eleventh switching transistor S11, and a second end of the tenth switching transistor S10 is connected to the first end of the twelfth switching transistor S12. Third ends of the seventh switching transistor S7, the eighth switching transistor S8, the ninth switching transistor S9, the tenth switching transistor S10, the eleventh switching transistor S11, and the twelfth switching transistor S12 are separately connected to the control module 24. The second ends of the ninth switching transistor S9 and the tenth switching transistor S10 are also simultaneously connected to the midpoint provided by the alternating current module 21.

Similarly, the single-phase correction circuit 223 may alternatively include one inductor and four bridge arms (it is assumed herein that a ninth bridge arm, a tenth bridge arm, an eleventh bridge arm, and a twelfth bridge arm are included). Specifically, the inductor may be a third inductor L3. The ninth bridge arm may include a thirteenth switching transistor S13 and a fourteenth switching transistor S14 connected in series, the tenth bridge arm may include a fifteenth switching transistor S15 and a sixteenth switching transistor S16 connected in series, the eleventh bridge arm may include a seventeenth switching transistor S17, and the twelfth bridge arm may include an eighteenth switching transistor S18. Herein, similar to the single-phase correction circuit 221, a first end of the thirteenth switching transistor S13 is connected to a first end of the fourteenth switching transistor S14, a second end of the thirteenth switching transistor S13 is connected to a first end of the seventeenth switching transistor S17, and a second end of the seventeenth switching transistor S17 is connected to the positive bus BUS+ of the direct current module 23. A second end of the fourteenth switching transistor S14 is connected to a first end of the eighteenth switching transistor S18, and a second end of the eighteenth switching transistor S18 is connected to the negative bus BUS- of the direct current module 23. A first end of the fifteenth switching transistor S15 is connected to a first end of the sixteenth switching transistor S16, a second end of the fifteenth switching transistor S15 is connected to the first end of the seventeenth switching transistor S17, and a second end of the sixteenth switching transistor S16 is connected to the first end of the eighteenth switching transistor S18. Third ends of the thirteenth switching transistor S13, the fourteenth switching transistor S14, the fifteenth switching transistor S15, the sixteenth switching transistor S16, the seventeenth switching transistor S17, and the eighteenth switching transistor S18 are separately connected to the control module 24. The second ends of the fifteenth switching transistor S15 and the sixteenth switching transistor S16 are also simultaneously connected to the midpoint provided by the alternating current module 21.

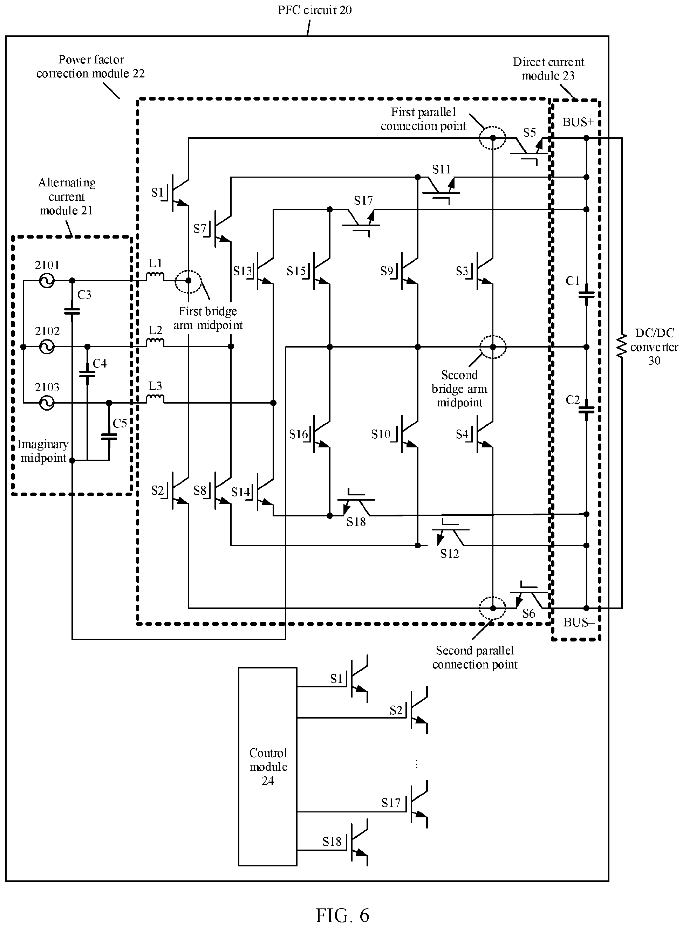

It may be understood that FIG. 5 shows the structure of the PFC circuit in a scenario in which the alternating current module 21 provides the midpoint. In some optional implementations, the alternating current module 21 may alternatively provide an imaginary midpoint. For example, FIG. 6 is a schematic diagram of another structure of the PFC circuit according to an embodiment of this application. Herein, FIG. 6 is a schematic diagram of another complete structure of the PFC circuit according to an embodiment of this application in a scenario in which the alternating current module 21 provides the imaginary midpoint. As shown in FIG. 6, the alternating current module 21 may further include a third capacitor C3, a fourth capacitor C4, and a fifth capacitor C5. A first end of the third capacitor C3 is separately connected to one end of the first alternating current source 2101 and one end of the first inductor L1, a first end of the fourth capacitor C4 is separately connected to one end of the second alternating current source 2102 and one end of the second inductor L2, a first end of the fifth capacitor C5 is separately connected to one end of the third alternating current source 2103 and one end of the third inductor L3, and a second end of the third capacitor C3, a second end of the fourth capacitor C4, and a second end of the fifth capacitor C5 are simultaneously connected to the power factor correction module 22 and the direct current module 23 as the imaginary midpoint of the alternating current module 21.

The foregoing describes the structure of the PFC circuit and functions of each component provided in embodiments of this application with reference to FIG. 2 to FIG. 6. The following describes in detail an implementation process of the PFC circuit control method provided in this application with reference to the foregoing described structure of the PFC circuit.

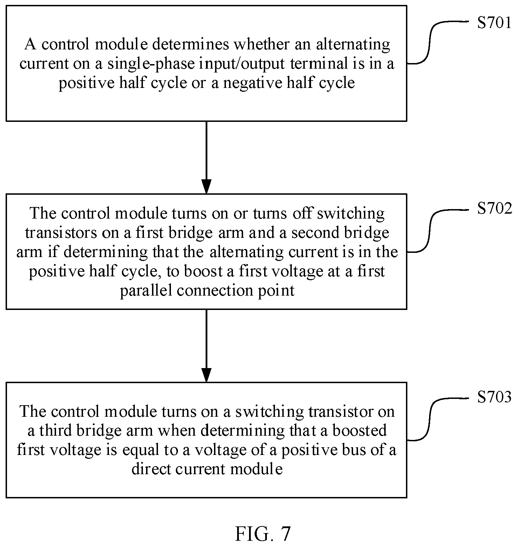

FIG. 7 is a schematic flowchart of a PFC circuit control method according to an embodiment of this application. The PFC circuit control method may be specifically performed by the control module 24 described above. It should be noted herein that, because the single-phase correction circuit 221, the single-phase correction circuit 222, and the single-phase correction circuit 223 in the power factor correction module 22 all use the PFC circuit control method provided in this embodiment of this application, to avoid repetition, the following uses the single-phase correction circuit 221 as an example to describe in detail a specific implementation process of the PFC circuit control method provided in this application. In addition, switching frequencies of the third switching transistor S3, the fourth switching transistor S4, the fifth switching transistor S5, and the sixth switching transistor S6 are far greater than a frequency of the A-phase alternating current. Therefore, when the following discusses change of a circuit state caused by turn-on or turn-off of the switching transistors, it may be considered that the voltage value of the A-phase alternating current is maintained at the third voltage value V3 and does not change. As shown in FIG. 7, the method includes the following steps.

S701: A control module determines whether an alternating current on a single-phase input/output terminal is in a positive half cycle or a negative half cycle.

In some feasible implementations, the control module 24 in the PFC circuit 20 may first determine whether the alternating current (namely, the A-phase alternating current) flowing through the single-phase input/output terminal (namely, the foregoing A-phase input/output terminal) is in the positive half cycle or the negative half cycle. If the control module 24 determines that the A-phase alternating current is in the positive half cycle, the control module 24 may determine to perform the following step S702.

It should be noted herein that, in this embodiment of this application, the alternating current flowing through each single-phase input/output terminal of the alternating current module 21 changes periodically, and each cycle of the alternating current may be divided into a positive half cycle and a negative half cycle based on a current direction. A cycle Tn of the A-phase alternating current is used as an example. The current direction is a time period in which the current flows out of the single-phase input/output terminal of the alternating current module 21 and flows in the midpoint or the imaginary midpoint of the alternating current module 21, that is, a positive half cycle corresponding to the cycle Tn. It may also be understood that, in this time period, the A-phase alternating current is in a positive half cycle. The current direction is a time period in which the current flows out of the midpoint or the imaginary midpoint of the alternating current module 21 and flows in the single-phase input/output terminal of the alternating current module 21, that is, a negative half cycle corresponding to the cycle Tn. It may also be understood that, in this time period, the A-phase alternating current is in a negative half cycle.

S702: The control module turns on or turns off switching transistors on the first bridge arm and the second bridge arm if determining that the alternating current is in the positive half cycle, to boost a first voltage at the first parallel connection point.

In some feasible implementations, when the control module 24 determines that the A-phase alternating current is in a positive half cycle (which is assumed to be a positive half cycle T1 herein), the control module may turn on or turn off the switching transistors on the first bridge arm 224 and the second bridge arm 225, to boost the first voltage at the first parallel connection point based on a freewheeling function of the first inductor L1. It should be noted that, because a plurality of positive half cycles exist in the A-phase alternating current, and control logic in each positive half cycle is the same, a positive half cycle T1 is used as an example for description in the following part. Herein, this embodiment of this application provides a plurality of optional implementations of boosting the first voltage. The following separately describes the plurality of implementations in detail.

### Implementation 1

When the control module 24 determines that the A-phase alternating current is in the positive half cycle T1, the control module 24 may keep the first switching transistor S1 in a turn-on state in the positive half cycle T1. In other words, when the control module 24 determines that the A-phase alternating current is at a start moment of the positive half cycle T1, that is, the first switching transistor S1 is turned on, the turn-on state lasts until an end moment of the positive half cycle T1 expires. In addition, the control module 24 may further turn off the second switching transistor S2, the fourth switching transistor S4, and the sixth switching transistor S6.

Optionally, in a turn-on state of the first switching transistor S1, when the control module 24 determines that a first preset moment (which is assumed to be t1 herein) expires, the control module 24 may turn on the third switching transistor S3. Herein, the first preset moment t1 is included in the positive half cycle T1.

Optionally, in a turn-on state of the first switching transistor S1, the control module 24 may alternatively turn on the third switching transistor S3 when determining that a voltage at the first parallel connection point is equal to a voltage at the second bridge arm midpoint. It may be understood herein that a voltage drop between the first parallel connection point and the second bridge arm midpoint is essentially a voltage (which is assumed to be VS3 herein) between the source and the drain of the third switching transistor S3. For ease of description, the voltage between the source and the drain of the switching transistor is collectively referred to as a terminal voltage of the switching transistor in the following part. Therefore, in specific implementation, the control module 24 may detect the terminal voltage VS3 of the third switching transistor S3 in real time by using the voltage detection unit 243. When the voltage detection unit 243 detects that the terminal voltage VS3 of the third switching transistor S3 is zero, the control module 24 may determine that the voltage at the first parallel connection point is equal to the voltage at the third parallel connection point. Herein, the third switching transistor S3 is turned on when voltages at two ends of the third switching transistor S3 are the same. That is, zero voltage turn-on of the third switching transistor S3 is implemented, and a switching loss of the PFC circuit can be reduced.

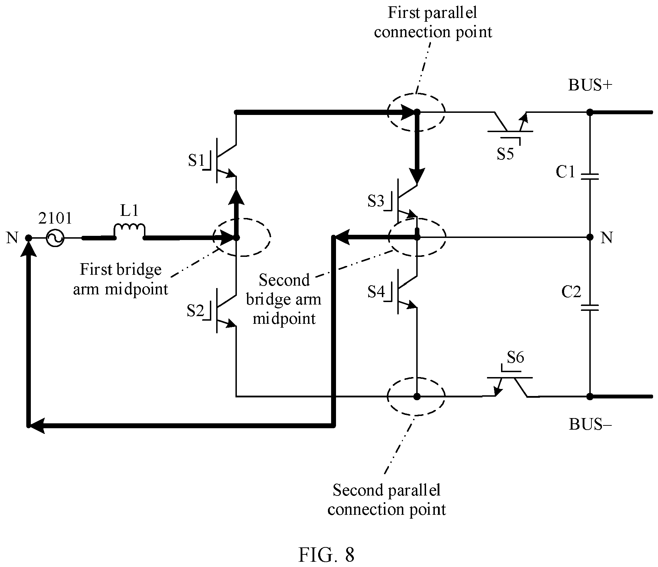

Further, FIG. 8 is a schematic diagram of a circuit status according to an embodiment of this application. After the third switching transistor S3 is turned on, a current loop passes through the first inductor L1, the first switching transistor S1, the third switching transistor S3, and an alternating current source 2101, and a current direction is a preset first current direction. In this case, the first inductor L1 is in a charging state, and a current (for ease of differentiation, the first current is used as a replacement for description below) flowing through the first inductor L1 gradually increases in the first current direction.

It should be noted herein that, when the entire PFC circuit does not enter a steady state, the control module 24 may preferentially determine, based on whether the first preset moment expires, whether to turn on the third switching transistor S3. After the entire PFC circuit enters the steady state, the control module 24 may preferentially determine, based on whether the voltage at the first parallel connection point is equal to the voltage at the second bridge arm midpoint (that is, whether the terminal voltage VS3 is zero), whether to turn on the third switching transistor S3.

Further, when the control module 24 determines that the current (which is assumed to be the first current herein) flowing through the first inductor is equal to a second preset current, the control module 24 may turn off the third switching transistor S3. Herein, a current direction of the second preset current is the first current direction, and a magnitude of the second preset current may be a preset second current value (which is assumed to be i2 herein). In other words, when the control module 24 determines that a direction of the first current is the first current direction and a current value of the first current is the second current value i2, the third switching transistor S3 may be turned off. It should be understood herein that, in real-time working, a factor such as a detection error is considered. When a difference between the current value of the first current and the second current value i2 is within an allowed error range, it may also be considered that the current value of the first current is equal to the second current value i2. Similarly, when a detected current value is compared with a preset current value in the following, if a difference between the detected current value and the preset current value is within an allowed error range, it may also be considered that the detected current value is equal to the preset current value. To avoid repetition, this case is not described again in the following part.

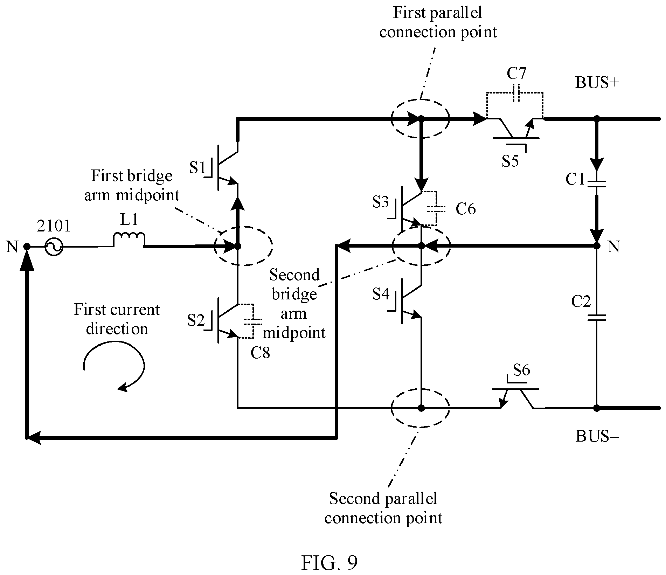

FIG. 9 is a schematic diagram of another circuit status according to an embodiment of this application. As shown in FIG. 9, after the control module 24 turns off the third switching transistor S3, the first inductor L1 starts to release energy stored in the first inductor L1. However, due to the freewheeling characteristic of the inductor, the current direction of the first inductor L1 is still the first current direction. In a process in which the first inductor L1 releases energy, electric energy released by the first inductor L1 charges a parasitic capacitor (which is assumed to be C6 herein) of the third switching transistor S3 and a parasitic capacitor (which is assumed to be C7 herein) of the fifth switching transistor S5 through the first parallel connection point. As charging continues, the first voltage at the first parallel connection point gradually increases. In this way, the first voltage is boosted.

### Implementation 2

When the control module 24 determines that the A-phase alternating current is in the positive half cycle T1, the control module 24 may keep the first switching transistor S1 and the fourth switching transistor S4 in a turn-on state in the positive half cycle T1. In other words, when the control module 24 determines that the A-phase alternating current is at a start moment of the positive half cycle T1, that is, the first switching transistor S1 and the fourth switching transistor S4 are turned on, the turn-on state lasts until an end moment of the positive half cycle T1 expires. In addition, the control module 24 may further turn off the sixth switching transistor S6.

Optionally, when the first switching transistor S1 and the fourth switching transistor S4 are turned on, the control module 24 may turn on the second switching transistor S2 and the third switching transistor S3 when determining that the first preset moment t1 expires. Herein, for a description of the first preset moment t1, refer to the foregoing description. Details are not described herein again.

Optionally, the control module 24 may alternatively turn on the second switching transistor S2 and the third switching transistor S3 when determining that the voltage at the first parallel connection point is equal to the voltage at the second bridge arm midpoint. Herein, for a specific process in which the control module 24 determines that the voltage at the first parallel connection point is equal to the voltage at the second bridge arm midpoint, refer to the foregoing described process. Details are not described herein again. Herein, when the voltage at the first parallel connection point is equal to the voltage at the second bridge arm midpoint, a voltage drop at two ends of the third switching transistor S3 and the second switching transistor S2 is zero. In this case, the second switching transistor S2 and the third switching transistor S3 are turned on. That is, zero voltage turn-on of the second switching transistor S2 and the third switching transistor S3 is implemented, and a switching loss of the PFC circuit can be further reduced. In addition, because a parallel loop exists between the first bridge arm midpoint and the second bridge arm midpoint, an equivalent resistance value between the first bridge arm midpoint and the second bridge arm midpoint becomes smaller. This can further reduce a turn-on loss of the PFC circuit.

It should be noted that, when the entire PFC circuit does not enter a steady state, the control module 24 may preferentially determine, based on whether the first preset moment t1 expires, whether to turn on the second switching transistor S2 and the third switching transistor S3. After the entire PFC circuit enters the steady state, the control module 24 may preferentially determine, based on whether the voltage at the first parallel connection point is equal to the voltage at the second bridge arm midpoint, whether to turn on the second switching transistor S2 and the third switching transistor S3.

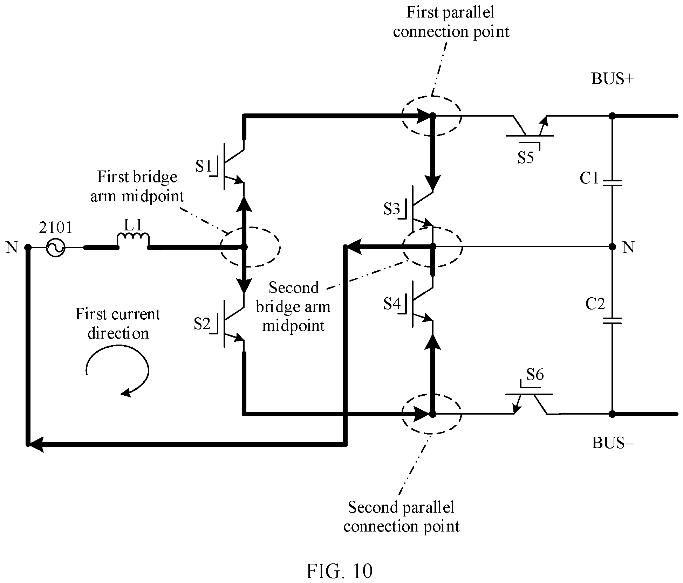

FIG. 10 is a schematic diagram of another circuit status according to an embodiment of this application. As shown in FIG. 10, after the second switching transistor S2 and the third switching transistor S3 are turned on, there are two current loops (which are assumed to be a first current loop and a second current loop herein), and current directions in the two current loops are both the first current direction. The first current loop passes through the first inductor L1, the first switching transistor S1, the third switching transistor S3, and the alternating current source 2101, and the second current loop passes through the first inductor L1, the second switching transistor S2, the fourth switching transistor S4, and the alternating current source 2101. In this case, the first inductor L1 is in a charging state, and the first current flowing through the first inductor L1 gradually increases in the first current direction.

Further, when the control module 24 determines that the first current flowing through the first inductor is equal to a second preset current, the control module 24 may turn off the second switching transistor S2 and the third switching transistor S3. Refer to FIG. 9. After the control module 24 turns off the second switching transistor S2 and the third switching transistor S3, the first inductor L1 starts to release energy stored in the first inductor L1. However, due to the freewheeling characteristic of the inductor, the current direction of the first inductor L1 is still the first current direction. In a process in which the first inductor L1 releases energy, electric energy released by the first inductor L1 charges a parasitic capacitor C6 of the third switching transistor S3, a parasitic capacitor C7 of the fifth switching transistor S5, and a parasitic capacitor C8 of the second switching transistor S2. As charging continues, the first voltage at the first parallel connection point gradually increases. In this way, the first voltage is boosted.

### Implementation 3

When the control module 24 determines that the A-phase alternating current is in the positive half cycle T1, the control module 24 may keep the first switching transistor S1 and the fourth switching transistor S4 in a turn-on state in the positive half cycle T1. In addition, the control module 24 may further turn off the sixth switching transistor S6.

Optionally, when the first switching transistor S1 and the fourth switching transistor S4 are turned on, the control module 24 may turn on the third switching transistor S3 when determining that the first preset moment t1 expires. Herein, for a description of the first preset moment t1, refer to the foregoing description. Details are not described herein again.

Optionally, the control module 24 may alternatively turn on the third switching transistor S3 when determining that the voltage at the first parallel connection point is equal to the voltage at the second bridge arm midpoint. Herein, for a specific process in which the control module 24 determines that the voltage at the first parallel connection point is equal to the voltage at the second bridge arm midpoint, refer to the foregoing described process. Details are not described herein again. Herein, when the voltage at the first parallel connection point is equal to the voltage at the second bridge arm midpoint, a voltage drop at two ends of the third switching transistor S3 is zero. In this case, the third switching transistor S3 is turned on. That is, zero voltage turn-on of the third switching transistor S3 is implemented, and a switching loss of the PFC circuit can be reduced.

It should be noted that, when the entire PFC circuit does not enter a steady state, the control module 24 may preferentially determine, based on whether the first preset moment t1 expires, whether to turn on the third switching transistor S3. After the entire PFC circuit enters the steady state, the control module 24 may preferentially determine, based on whether the voltage at the first parallel connection point is equal to the voltage at the second bridge arm midpoint, whether to turn on the third switching transistor S3.

Further, the control module 24 turns on the second switching transistor S2 when determining that first preset duration (which is assumed to be dt1 herein) expires. A start moment of the first preset duration d11 is a turn-on moment of the third switching transistor. Herein, because the first switching transistor S1, the third switching transistor S3, and the fourth switching transistor S4 are already turned on before the second switching transistor S2 is turned on, the second switching transistor S2 is turned on when a voltage drop at two ends is zero. That is, zero voltage turn-on of the second switching transistor S2 is implemented, and a switching loss of the PFC circuit can be reduced. In addition, a parallel loop exists between the first bridge arm midpoint and the second bridge arm midpoint after the second switching transistor S2 is turned on, and therefore an equivalent resistance value between the first bridge arm midpoint and the second bridge arm midpoint becomes smaller. This can further reduce a turn-on loss of the PFC circuit.

Refer to FIG. 10. After the second switching transistor S2 is also turned on, two current loops exist in the circuit, and current directions in the two current loops are both the first current direction. In this case, the first inductor L1 is in a charging state, and the first current flowing through the first inductor L1 gradually increases in the first current direction.

Further, the control module 24 may turn off the second switching transistor S2 when determining that second preset duration (which is assumed to be dt2 herein) expires. A start moment of the second preset duration dt2 is a turn-on moment of the second switching transistor S2. It can be understood herein that, because the first switching transistor S1 and the third switching transistor S3 are still in a turn-on state when the second switching transistor S2 is turned off, the second switching transistor S2 is turned off when a zero voltage exists. This further implements zero voltage turn-off of the second switching transistor S2, and further reduces a switching loss of the PFC circuit.

Further, when the control module 24 determines that the first current flowing through the first inductor is equal to a second preset current, the control module 24 may turn off the third switching transistor S3. Refer to FIG. 9. After the control module 24 turns off the third switching transistor S3, the first inductor L1 starts to release energy stored in the first inductor L1. However, due to the freewheeling characteristic of the inductor, the current direction of the first inductor L1 is still the first current direction. In a process in which the first inductor L1 releases energy, electric energy released by the first inductor L1 charges a parasitic capacitor C6 of the third switching transistor S3, a parasitic capacitor C7 of the fifth switching transistor S5, and a parasitic capacitor C8 of the second switching transistor. As charging continues, the first voltage at the first parallel connection point gradually increases. In this way, the first voltage is boosted.

S703: The control module turns on a switching transistor on the third bridge arm when determining that a boosted first voltage is equal to a voltage of the positive bus of the direct current module.

In some feasible implementations, after performing the step S702, the control module 24 may detect whether the boosted first voltage is equal to the voltage of the positive bus BUS+ of the direct current module 23. The control module 24 may turn on the fifth switching transistor S5 included in the third bridge arm 226 when determining that the boosted first voltage is equal to the voltage of the positive bus BUS+. Herein, when the first voltage is equal to the voltage of the positive bus BUS+, a voltage drop at two ends of the fifth switching transistor S5 is zero. In this case, the fifth switching transistor S5 is turned on. That is, zero voltage turn-on of the fifth switching transistor S5 is implemented, and a switching loss of the PFC circuit can be further reduced.

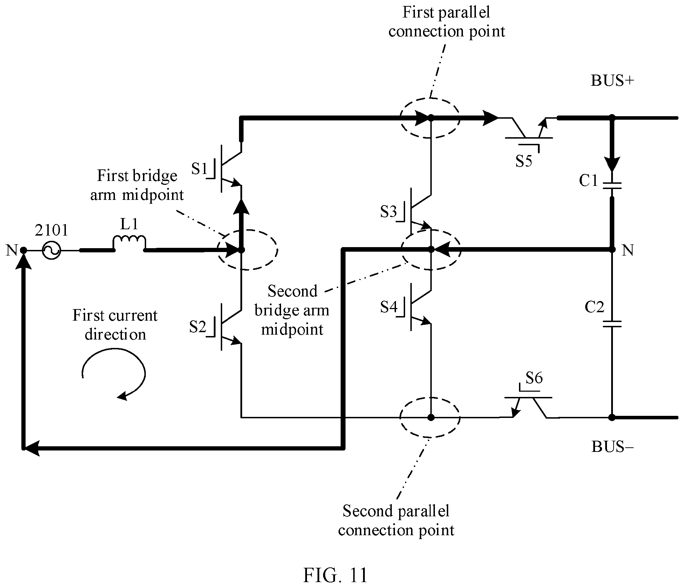

FIG. 11 is a schematic diagram of another circuit status according to an embodiment of this application. As shown in FIG. 11, after the fifth switching transistor S5 is turned on, the first inductor L1 continues to release energy, and the current loop passes through the first inductor L1, the first switching transistor S1, the fifth switching transistor S5, the first capacitor C1, and the alternating current source 2101, to form a boost loop, and the first capacitor C1 is charged.

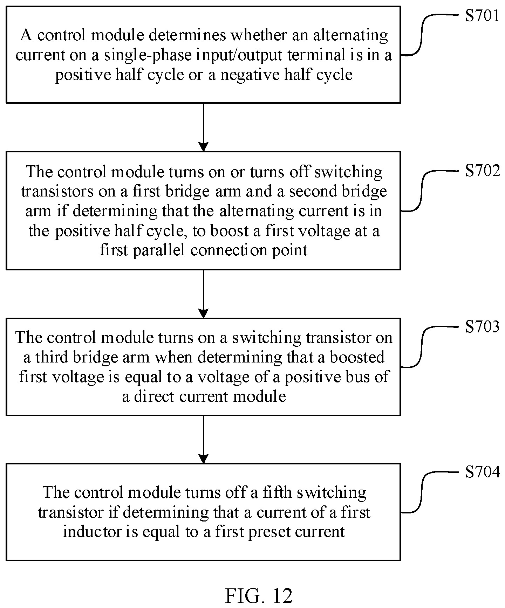

Further, FIG. 12 is another schematic flowchart of a PFC circuit control method according to an embodiment of this application. As shown in FIG. 12, the control method may further include the following steps.

S704: The control module turns off the fifth switching transistor if determining that a current of the first inductor is equal to a first preset current.

In some feasible implementations, after turning on the fifth switching transistor S5, the control module 24 may determine whether the first current is equal to the first preset current. The control module 24 may turn off the fifth switching transistor S5 if determining that the first current is equal to the first preset current.

In specific implementation, the control module 24 may detect a magnitude and a direction of the first current by using the current detection unit 242. When the magnitude of the first current detected by using the current detection unit 242 is equal to a magnitude of the first preset current, and directions of the first current and the first preset current are the same, the control module 24 may turn off the fifth switching transistor S5.

Optionally, when the third voltage value V3 described above is less than half of the first voltage value V1, the first preset current may be a zero current. When the third voltage value V3 described above is equal to or greater than half of the first voltage value V1, the magnitude of the first preset current may be a preset first current value (which is assumed to be i1 herein), and the direction of the first preset current may be a second current direction opposite to the first current direction.

Further, after the fifth switching transistor S5 is turned off, if the control module 24 determines to be still in the positive half cycle T1, the control module 24 repeatedly performs actions of the step S702, the step S703, and the step S704 until the positive half cycle T1 ends.

Specifically, after the fifth switching transistor S5 is turned off, the parasitic capacitor C6 and the parasitic capacitor C7 resonate with the first inductor L1 because the parasitic capacitor C6 and the parasitic capacitor C7 exist. As a result, the direction of the first current of the first inductor L1 changes from the original first current direction to the opposite second current direction. Due to a current function in the opposite direction, the voltage at the first parallel connection point gradually decreases.

When the step S702 is performed by using implementation 1, the control module 24 may turn on the third switching transistor S3 again when detecting that the terminal voltage VS3 of the third switching transistor S3 is zero again, and then the control module 24 may perform subsequent actions corresponding to implementation 1 and actions of the step S703 and the step S704. Such processing is repeatedly performed until the positive half cycle T1 ends. It should be noted herein that, in the scenario of implementation 1, the first switching transistor S1 is turned on, and the second switching transistor S2, the fourth switching transistor S4, and the sixth switching transistor S6 are turned off. Therefore, in subsequent repeated actions, only the third switching transistor S3 and the fifth switching transistor S5 need to be controlled to be turned on or turned off, and states of other switching transistors should keep unchanged.

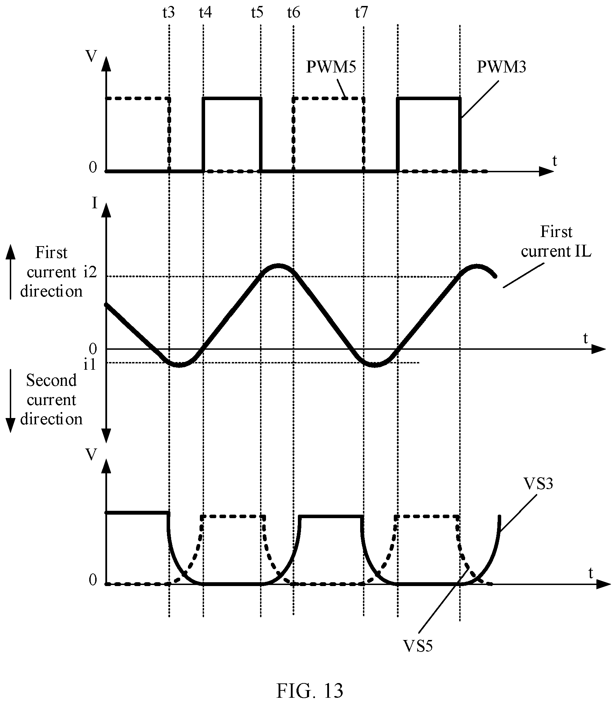

For example, FIG. 13 is a schematic diagram of a waveform according to an embodiment of this application. Herein, FIG. 13 shows waveforms of control signals (a PWM wave is used as an example herein, and it is assumed that a control signal of the third switching transistor is PWM3, and a control signal of the fifth switching transistor is PWM5) of the third switching transistor S3 and the fifth switching transistor S5, waveforms of terminal voltages (namely, VS3 and VS5) of the third switching transistor S3 and the fifth switching transistor S5, and waveforms of the first current of the first inductor L1 after the PCF circuit enters a steady state. It should be understood that FIG. 13 is described by using an example in which the third voltage value V3 is equal to or greater than half of the first voltage value V1, that is, the first preset current is in the second current direction, and the magnitude is i1. As shown in FIG. 13, after the entire PFC circuit enters the steady state, the control module 24 may control the PWM5 to be at a low level when determining that the direction of the first current is the second current direction and the magnitude is i2 (that is, at a moment t3 shown in the figure). In this case, both the fifth switching transistor S5 and the third switching transistor S3 are in a turn-off state. Then, the control module 24 controls the PWM3 to be at a high level, and turns on the third switching transistor S3 when determining that the terminal voltage VS3 of the third switching transistor S3 is zero (that is, at a moment t4 shown in the figure). This implements zero level turn-on of the third switching transistor. Then, the control module 24 may control the PWM3 to be at a low level when determining that the direction of the first current is the first current direction, and the magnitude of the first current is the first current value i1 (that is, at a moment t5 shown in the figure). In this case, the third switching transistor S3 is turned off. After the third switching transistor S3 is turned off, due to boosting of the first voltage, a terminal voltage VS5 of the fifth switching transistor S5 gradually decreases until the terminal voltage VS5 is equal to 0 (that is, at a moment t6 in the figure), the PWM5 may be controlled to be at a high level, and the fifth switching transistor S5 is turned on. This implements zero level turn-on of the fifth switching transistor S5. After the third switching transistor S5 is turned on, the first current IL gradually decreases until the control module 24 determines again that the direction of the first current is the second current direction, and the magnitude is i1 (that is, at a moment t7 shown in the figure), the PWM5 may be controlled to be at a low level, and the fifth switching transistor S5 is turned off. In this case, the entire circuit returns again to a state in which both the fifth switching transistor S5 and the third switching transistor S3 are turned off, and the control module 24 may continue to repeat control on turn-on or turn-off of the third switching transistor S3 and the fifth switching transistor S5.

When the step S702 is performed by using implementation 2, the control module 24 turns on the second switching transistor S2 and the third switching transistor S3 when detecting that voltages at two ends of the third switching transistor S3 are equal, and then the control module 24 may perform subsequent actions corresponding to implementation 2 and actions of the step S703 and the step S704. Such processing is repeatedly performed until the positive half cycle T1 ends. It should be noted herein that, in the scenario of implementation 2, the first switching transistor S1 is turned on, and the fourth switching transistor S4 and the sixth switching transistor S6 are turned off. Therefore, in subsequent repeated actions, only the second switching transistor S2, the third switching transistor S3, and the fifth switching transistor S5 need to be controlled to be turned on or turned off, and states of other switching transistors should keep unchanged.

For example, continue to refer to FIG. 13. It should be understood that, in the foregoing implementation 2, a waveform of a switching transistor signal (which is assumed to be PWM2 herein) of the second switching transistor S2 is completely the same as that of the control signal PWM3 of the third switching transistor S3. In addition, when the first switching transistor S1 and the fourth switching transistor S4 are turned on, a change waveform of the terminal voltage of the second switching transistor S2 is also the same as that of the terminal voltage of the third switching transistor S3. Therefore, FIG. 13 is still used as an example for description herein. As shown in FIG. 13, after the entire PFC circuit enters the steady state, the control module 24 may control the PWM5 to be at a low level when determining that the direction of the first current is the second current direction and the magnitude is i1 (that is, at a moment t3 shown in the figure). In this case, the fifth switching transistor S5, the second switching transistor S2, and the third switching transistor S3 are all in a turn-off state. Then, the control module 24 controls the PWM3 and the PWM2 to be at a high level, and turns on the second switching transistor S2 and the third switching transistor S3 when determining that the terminal voltage VS3 of the third switching transistor S3 is zero (that is, at the moment t4 shown in the figure). This implements zero level turn-on of the second switching transistor S2 and the third switching transistor S3. Then, the control module 24 may control the PWM3 and the PWM2 to be at a low level when determining that the direction of the first current is the first current direction, and the magnitude of the first current is the first current value i1 (that is, at the moment t5 shown in the figure). In this case, the second switching transistor S2 and the third switching transistor S3 are turned off. Then, due to boosting of the first voltage, the terminal voltage VS5 of the fifth switching transistor S5 gradually decreases until the terminal voltage VS5 is equal to 0 (that is, at the moment t6 in the figure), the PWM5 may be controlled to be at a high level, and the fifth switching transistor S5 is turned on. This implements zero level turn-on of the fifth switching transistor S5. After the third switching transistor S5 is turned on, the first current IL gradually decreases until the control module 24 determines again that the direction of the first current is the second current direction, and the magnitude is i1 (that is, at the moment t7 shown in the figure), the PWM5 may be controlled to be at a low level, and the fifth switching transistor S5 is turned off. In this case, the entire circuit returns again to a state in which the fifth switching transistor S5, the second switching transistor S2, and the third switching transistor S3 are all turned off, and the control module 24 may continue to repeat control on turn-on or turn-off of the second switching transistor S2, the third switching transistor S3, and the fifth switching transistor S5.

When the step S702 is performed by using implementation 3, the control module 24 first turns on the third switching transistor S3 when detecting that voltages at two ends of the third switching transistor S3 are equal, and then turns on the second switching transistor S2 when another first preset duration dt1 expires. Then, the second switching transistor S2 is turned off when another second preset duration dt2 expires. Then, the third switching transistor S3 is turned off when it is determined that the first current is equal to the first preset current again. Then, the control module 24 may continue to perform actions of the step S703 and the step S704. Such processing is repeatedly performed until the positive half cycle T1 ends. It should be noted herein that, in the scenario of implementation 3, the first switching transistor S1 and the fourth switching transistor S4 are turned on, and the sixth switching transistor S6 is turned off. Therefore, in subsequent repeated actions, only the second switching transistor S2, the third switching transistor S3, and the fifth switching transistor S5 need to be controlled to be turned on or turned off, and states of other switching transistors should keep unchanged.

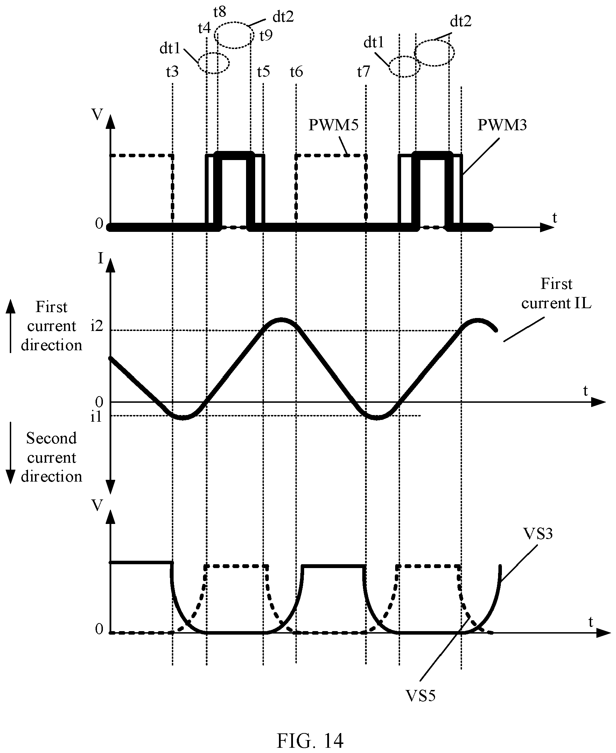

For example, FIG. 14 is a schematic diagram of another waveform according to an embodiment of this application. FIG. 14 shows waveforms of control signals (which are respectively PWM2, PWM3, and PWM5) of the second switching transistor S2, the third switching transistor S3, and the fifth switching transistor S5, waveforms of terminal voltages (namely, VS3 and VS5) of the third switching transistor S3 and the fifth switching transistor S5, and waveforms of the first current of the first inductor L1 after the PCF circuit enters a steady state. As shown in FIG. 14, after the entire PFC circuit enters the steady state, the control module 24 may control the PWM5 to be at a low level when determining that the direction of the first current is the second current direction and the magnitude is i1 (that is, at a moment t3 shown in the figure). In this case, the fifth switching transistor S5, the second switching transistor S2, and the third switching transistor S3 are all in a turn-off state. Then, the control module 24 controls the PWM3 to be at a high level, and turns on the third switching transistor S3 when determining that the terminal voltage VS3 of the third switching transistor S3 is zero (that is, at a moment t4 shown in the figure). This implements zero level turn-on of the third switching transistor S3. Then, the control module 24 may control the PWM2 to be at a high level and turn on the second switching transistor S2 when determining that first preset duration dt1 expires (that is, when a moment t8 shown in the figure expires, a time difference between the moment t8 and the moment t4 is the first preset duration dt1). In this case, zero voltage turn-on of the second switching transistor S2 is implemented. Then, the control module 24 may control the PWM2 to be at a low level, and turn on the second switching transistor S2 when determining that second preset duration dt2 expires (that is, when a moment t9 shown in the figure expires, a time difference between the moment t9 and the moment t8 is the second preset duration dt2). In this case, zero voltage turn-off of the second switching transistor S2 is implemented. Then, the control module 24 may control the PWM3 to be at a low level when determining that the direction of the first current is the first current direction, and the magnitude of the first current is the first current value i1 (that is, at a moment t5 shown in the figure). In this case, the third switching transistor S3 is turned off. Then, due to boosting of the first voltage, the terminal voltage VS5 of the fifth switching transistor S5 gradually decreases until the terminal voltage VS5 is equal to 0 (that is, at a moment t6 in the figure), the PWM5 may be controlled to be at a high level, and the fifth switching transistor S5 is turned on. This implements zero level turn-on of the fifth switching transistor S5. After the third switching transistor S5 is turned on, the first current IL gradually decreases until the control module 24 determines again that the direction of the first current is the second current direction, and the magnitude is i1 (that is, at a moment t7 shown in the figure), the PWM5 may be controlled to be at a low level, and the fifth switching transistor S5 is turned off. In this case, the entire circuit returns again to a state in which the fifth switching transistor S5, the second switching transistor S2, and the third switching transistor S3 are all turned off, and the control module 24 may continue to repeat control on turn-on or turn-off of the second switching transistor S2, the third switching transistor S3, and the fifth switching transistor S5.

The foregoing describes various implementations of the corresponding control method in the positive half cycle T1. The following further describes various implementations included in the control method in the negative half cycle (which is assumed to be T2 herein).

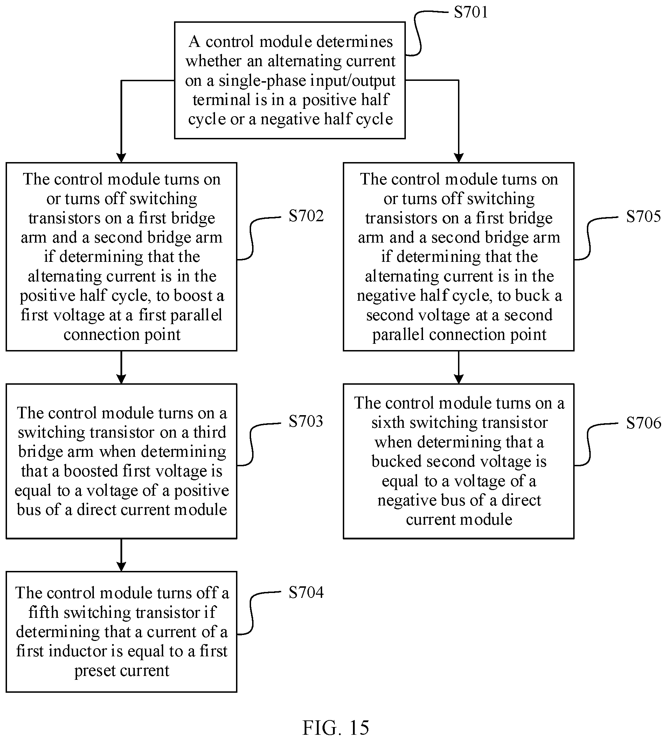

FIG. 15 is another schematic flowchart of a PFC circuit control method according to an embodiment of this application. As shown in FIG. 15, the control method further includes the following steps.

S705: The control module turns on or turns off the switching transistors on the first bridge arm and the second bridge arm if determining that the alternating current is in the negative half cycle, to buck a second voltage at the second parallel connection point.

In some feasible implementations, when the control module 24 determines that the A-phase alternating current is in a negative half cycle (which is assumed to be a negative half cycle T1 herein), the control module may turn on or turn off the switching transistors on the first bridge arm 224 and the second bridge arm 225, to buck the second voltage at the second parallel connection point by using the freewheeling function of the first inductor L1. It should be noted that, because a plurality of negative half cycles exist in the A-phase alternating current, and control logic in each negative half cycle is the same, a negative half cycle T1 is used as an example for description in the following part. Herein, this application provides a plurality of optional implementations in which the control module 24 turns on or turns off the switching transistors on the first bridge arm 224 and the second bridge arm 225 to buck the second voltage by using the first inductor L1. The following separately describes the plurality of implementations in detail.

### Implementation 4

When the control module 24 determines that the A-phase alternating current is in the negative half cycle T2, the control module 24 may keep the second switching transistor S2 in a turn-on state in the negative half cycle T2. In other words, when the control module 24 determines that the A-phase alternating current is in the negative half cycle T2, that is, the second switching transistor S2 is turned on, the turn-on state lasts until the negative half cycle T2 ends. In addition, the control module 24 may further turn off the first switching transistor S1, the third switching transistor S3, and the fifth switching transistor S5.

Optionally, in a turn-on state of the second switching transistor S2, when the control module 24 determines that a second preset moment (which is assumed to be t2 herein) expires, the control module 24 may turn on the fourth switching transistor S4. Herein, the second preset moment t2 is included in the negative half cycle T2.

Optionally, in a turn-on state of the second switching transistor S2, the control module 24 may turn on the fourth switching transistor S4 when determining that a voltage (namely, the second voltage) at the second parallel connection point is equal to a voltage at the second bridge arm midpoint. It may be understood herein that a voltage drop between the second parallel connection point and the second bridge arm midpoint is essentially a voltage (which is assumed to be VS4 herein) between two ends of the fourth switching transistor S4. Therefore, when a terminal voltage S4 of the fourth switching transistor S4 is zero, the fourth switching transistor S4 is turned on. That is, zero voltage turn-on of the fourth switching transistor S4 is implemented, and a switching loss of the PFC circuit is also reduced.

After the third switching transistor S3 is turned on, the current loop passes through the fourth switching transistor S4, the second switching transistor S2, the first inductor L1, and the alternating current source 2101, and the current direction is the second current direction opposite to the first current direction. In this case, the first inductor L1 is in a charging state, and a current (for ease of differentiation, a third current is used as a replacement for description below) flowing through the first inductor L1 gradually increases in the second current direction.

Similarly, when the entire PFC circuit does not enter a steady state, the control module 24 may preferentially determine, based on whether the second preset moment t2 expires, whether to turn on the fourth switching transistor S4. After the entire PFC circuit enters the steady state, the control module 24 may preferentially determine, based on whether the voltage at the second parallel connection point is equal to the voltage at the second bridge arm midpoint, whether to turn on the fourth switching transistor S4.

Further, the control module 24 may turn off the fourth switching transistor S4 when determining that the current of the first inductor (namely, the first current) is equal to a fourth preset current. Herein, a direction of the fourth preset current is the second direction, and a magnitude of the fourth preset current is a preset fourth current value (which is assumed to be i4 herein). After the control module 24 turns off the fourth switching transistor S4, the first inductor L1 starts to release energy stored in the first inductor L1. However, due to the freewheeling characteristic of the inductor, the current direction of the first inductor L1 is still the second current direction. In a process in which the first inductor L1 releases energy, electric energy stored in a parasitic capacitor (which is assumed to be C9 herein) of the fourth switching transistor S4 and a parasitic capacitor (which is assumed to be C10 herein) of the sixth switching transistor S6 is extracted by using the second parallel connection point. Therefore, as the energy of the first inductor L1 is released, the second voltage at the second parallel connection point gradually decreases. In this way, the second voltage is bucked.

### Implementation 5

When the control module 24 determines that the A-phase alternating current is in the negative half cycle T2, the control module 24 may keep the second switching transistor S2 and the third switching transistor S3 in a turn-on state in the negative half cycle T2. In other words, when the control module 24 determines that the A-phase alternating current is in the negative half cycle T2, that is, the second switching transistor S2 and the third switching transistor S3 are turned on, the turn-on state lasts until an end moment of the negative half cycle T2 expires. In addition, the control module 24 may further turn off the fifth switching transistor S5.

Further, optionally, when the second switching transistor S2 and the third switching transistor S3 are turned on, the control module 24 may turn on the first switching transistor S1 and the fourth switching transistor S4 when determining that the second preset moment t2 expires. Herein, for description of the second preset moment t2, refer to the foregoing description. Details are not described herein again.

Optionally, the control module 24 may alternatively turn on the first switching transistor S1 and the fourth switching transistor S4 when determining that the voltage at the second parallel connection point is equal to the voltage at the second bridge arm midpoint. Herein, when the voltage at the second parallel connection point is equal to the voltage at the second bridge arm midpoint, a voltage drop at two ends of the first switching transistor S1 and the fourth switching transistor S4 is zero. In this case, the first switching transistor S1 and the fourth switching transistor S4 are turned on. That is, zero voltage turn-on of the first switching transistor S1 and the fourth switching transistor S4 is implemented, and a switching loss of the PFC circuit can be further reduced. In addition, because a parallel loop exists between the first bridge arm midpoint and the second bridge arm midpoint, an equivalent resistance value between the first bridge arm midpoint and the second bridge arm midpoint becomes smaller. This can further reduce a turn-on loss of the PFC circuit.

It should be noted that, when the entire PFC circuit does not enter a steady state, the control module 24 may preferentially determine, based on whether the second preset moment t2 expires, whether to turn on the first switching transistor S1 and the fourth switching transistor S4. After the entire PFC circuit enters the steady state, the control module 24 may preferentially determine, based on whether the voltage at the second parallel connection point is equal to the voltage at the second bridge arm midpoint, whether to turn on the first switching transistor S1 and the fourth switching transistor S4.

After the first switching transistor S1 and the fourth switching transistor S4 are turned on, the first inductor L1 is in a charging state, and the third current flowing through the first inductor L1 gradually increases in the second current direction.

Further, when the control module 24 determines that the current of the first inductor (namely, the first current) is equal to a fourth preset current, the control module 24 may turn off the first switching transistor S1 and the fourth switching transistor S4. After the control module 24 turns off the first switching transistor S1 and the fourth switching transistor S4, the first inductor L1 starts to release energy stored in the first inductor L1. However, due to the freewheeling characteristic of the inductor, the current direction of the first inductor L1 is still the second current direction. In a process in which the first inductor L1 releases energy, electric energy stored in the parasitic capacitor C9 and the parasitic capacitor C10 is extracted by using the second parallel connection point. Therefore, as the energy of the first inductor L1 is released, the second voltage at the second parallel connection point gradually decreases. In this way, the second voltage is bucked.

### Implementation 6

When the control module 24 determines that the A-phase alternating current is in the negative half cycle T2, the control module 24 may keep the second switching transistor S2 and the third switching transistor S3 in a turn-on state in the negative half cycle T2. In addition, the control module 24 may further turn off the fifth switching transistor S5.

Further, optionally, when the second switching transistor S2 and the third switching transistor S3 are turned on, the control module 24 may turn on the fourth switching transistor S4 when determining that the second preset moment t2 expires. Herein, for description of the second preset moment t2, refer to the foregoing description. Details are not described herein again.

Optionally, the control module 24 may alternatively turn on the fourth switching transistor S4 when determining that the voltage at the second parallel connection point is equal to the voltage at the second bridge arm midpoint. Herein, when the voltage at the second parallel connection point is equal to the voltage at the second bridge arm midpoint, a voltage drop at two ends of the fourth switching transistor S4 is zero. In this case, the fourth switching transistor S4 is turned on. That is, zero voltage turn-on of the fourth switching transistor S4 is implemented, and a switching loss of the PFC circuit can be reduced.

It should be noted that, when the entire PFC circuit does not enter a steady state, the control module 24 may preferentially determine, based on whether the second preset moment t2 expires, whether to turn on the fourth switching transistor S4. After the entire PFC circuit enters the steady state, the control module 24 may preferentially determine, based on whether the voltage at the second parallel connection point is equal to the voltage at the second bridge arm midpoint, whether to turn on the fourth switching transistor S4.

Further, the control module 24 turns on the first switching transistor S1 when determining that third preset duration (which is assumed to be dt3 herein) expires. A start moment of the third preset duration dt3 is a turn-on moment of the fourth switching transistor S4. Herein, because the second switching transistor S2, the third switching transistor S3, and the fourth switching transistor S4 are already turned on before the first switching transistor S1 is turned on, the first switching transistor S1 is turned on when a voltage drop at two ends is zero. That is, zero voltage turn-on of the first switching transistor S 1 is implemented, and a switching loss of the PFC circuit can be reduced. In addition, a parallel loop exists between the first bridge arm midpoint and the second bridge arm midpoint after the first switching transistor S 1 is turned on, and therefore an equivalent resistance value between the first bridge arm midpoint and the second bridge arm midpoint becomes smaller. This can further reduce a turn-on loss of the PFC circuit.

After the first switching transistor S1 is also turned on, the first inductor L1 is in a charging state, and the third current flowing through the first inductor L1 gradually increases in the second current direction.

Further, the control module 24 may turn off the first switching transistor S1 when determining that fourth preset duration (which is assumed to be dt4 herein) expires. A start moment of the fourth preset duration dt4 is a turn-on moment of the first switching transistor S1. It may be understood herein that, because the second switching transistor S2, the third switching transistor S3, and the fourth switching transistor S4 are still in a turn-on state when the first switching transistor S1 is turned off, the first switching transistor S1 is turned off when a zero voltage exists. This further implements zero voltage turn-off of the first switching transistor S1, and may further reduce a switching loss of the PFC circuit.

Further, when the control module 24 determines that the first current is equal to the fourth preset current, the control module 24 may turn off the fourth switching transistor S4. After the control module 24 turns off the first switching transistor S1 and the fourth switching transistor S4, the first inductor L1 starts to release energy stored in the first inductor L1. However, due to the freewheeling characteristic of the inductor, the current direction of the first inductor L1 is still the second current direction. In a process in which the first inductor L1 releases energy, electric energy stored in the parasitic capacitor C9 and the parasitic capacitor C10 is extracted by using the second parallel connection point. Therefore, as the energy of the first inductor L1 is released, the second voltage at the second parallel connection point gradually decreases. In this way, the second voltage is bucked.

S706: The control module turns on the sixth switching transistor when determining that a bucked second voltage is equal to a voltage of the negative bus of the direct current module.

In some feasible implementations, after performing step S705, the control module 24 may detect whether the bucked second voltage is equal to the voltage of the negative bus BUS- of the direct current module 23. The control module 24 may turn on the sixth switching transistor S6 when determining that the bucked second voltage is equal to the voltage of the negative bus BUS-. Herein, when the bucked second voltage is equal to the voltage of the negative bus BUS-, a voltage drop at two ends of the sixth switching transistor S6 is zero. In this case, the sixth switching transistor S6 is turned on. That is, zero voltage switching of the sixth switching transistor S6 is implemented, and a switching loss of the PFC circuit can be further reduced. After the sixth switching transistor S6 is turned on, the first inductor L1 continues to release energy, and the current loop passes through the alternating current source 2101, the second capacitor C2, the sixth switching transistor S6, the second switching transistor S2, and the first inductor L1, to form a boost loop, and the second capacitor C2 is charged.

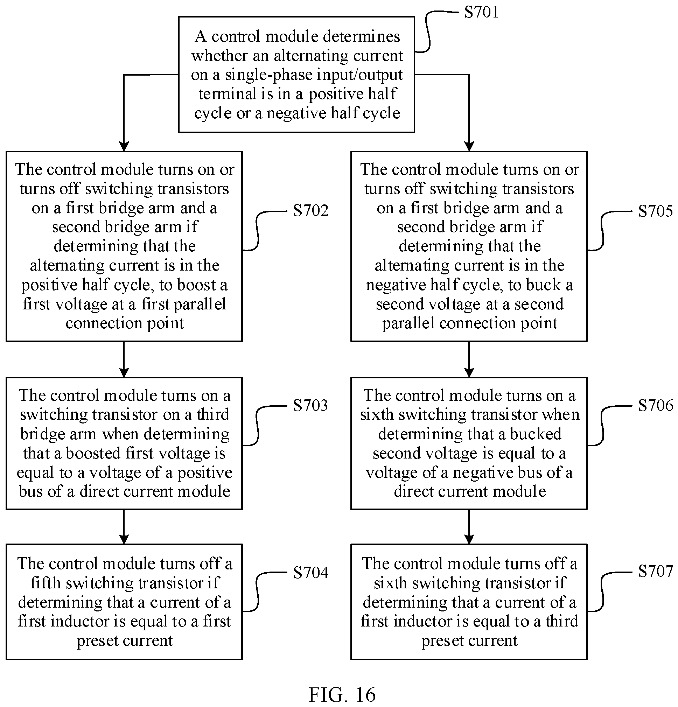

Further, FIG. 16 is another schematic flowchart of a PFC circuit control method according to an embodiment of this application. As shown in FIG. 16, the control method may further include the following steps.

S707: The control module turns off the sixth switching transistor if determining that the current of the first inductor is equal to a third preset current.

In some feasible implementations, after the sixth switching transistor S6 is turned on, the control module 24 may detect a current flowing through the first inductor L1, and turn off the sixth switching transistor S6 when determining that the first current is equal to the third preset current.

In specific implementation, the control module 24 may detect a magnitude and a direction of the first current by using the current detection unit 243. When the magnitude of the first current detected by using the current detection unit 243 is equal to a magnitude of the third preset current, and the direction of the first current is the same as that of the first preset current, the control module 24 may turn off the sixth switching transistor S6.

Optionally, when the third voltage value V3 described above is less than half of the second voltage value V1, the third preset current is a zero current. When the third voltage value V3 described above is equal to or greater than half of the first voltage value V1, the magnitude of the third preset current is the preset third current value (which is assumed to be i3 herein), and the direction of the third preset current is the first current direction.

Further, after the sixth switching transistor S6 is turned off, if the control module 24 determines to be still in the negative half cycle T2, the control module 24 repeatedly performs actions of the step S705, the step S706, and the step S707 until the negative half cycle T2 ends.

In specific implementation, after the sixth switching transistor S6 is turned off, the parasitic capacitor C8 and the parasitic capacitor C8 resonate with the first inductor L1 because the parasitic capacitor C8 and the parasitic capacitor C9 exist. As a result, a current in the first current direction (which is assumed to be a fourth current herein) exists in the first inductor L1. Due to a function of the fourth current, the voltage at the second parallel connection point gradually increases.

When the step S705 is performed by using implementation 4, the control module 24 turns on the fourth switching transistor S4 when detecting that voltages at two ends of the fourth switching transistor S4 are equal (that is, the voltage at the second parallel connection point is equal to the voltage at the second bridge arm midpoint), and then the control module 24 may perform subsequent actions corresponding to implementation 4 and actions of the step S706 and the step S707. Such processing is repeatedly performed until the negative half cycle T2 ends. It should be noted herein that, in the scenario of implementation 4, the second switching transistor S2 is turned on, and the first switching transistor S 1, the third switching transistor S3, and the fifth switching transistor S5 are turned off. Therefore, in subsequent repeated actions, only the fourth switching transistor S4 and the sixth switching transistor S6 need to be controlled to be turned on or turned off, and states of other switching transistors should keep unchanged.

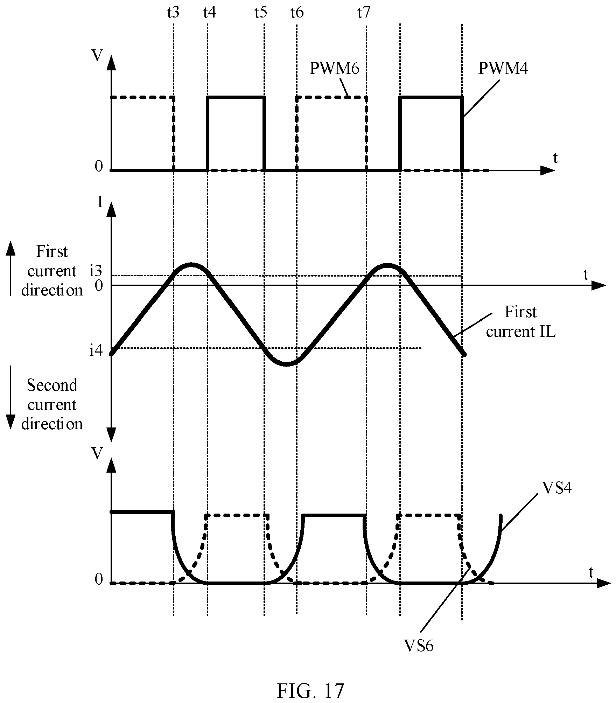

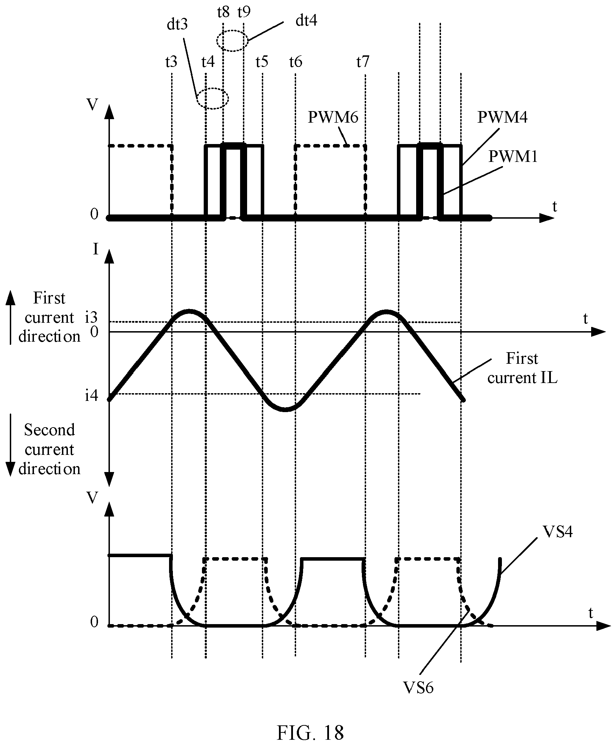

For example, FIG. 17 is a schematic diagram of another waveform according to an embodiment of this application. Herein, FIG. 18 shows waveforms of control signals (a PWM wave is used as an example herein, and it is assumed that a control signal of the fourth switching transistor S4 is PWM4, and a control signal of the sixth switching transistor S6 is PWM6) of the fourth switching transistor S4 and the sixth switching transistor S6, waveforms of terminal voltages (namely, VS4 and VS6) of the fourth switching transistor S4 and the sixth switching transistor S6, and waveforms of the first current of the first inductor L1 after the PCF circuit enters a steady state. It should be understood that FIG. 17 is described by using an example in which the third voltage value V3 is equal to or greater than half of the first voltage value V1, that is, the third preset current is in the first current direction, and the magnitude is i3. In actual implementation, the control module 24 may control the PWM6 to be at a low level, and turn off the sixth switching transistor S6 when determining that the magnitude of the first current is i3 and the direction is the first direction (that is, at a moment t3 shown in the figure). In this case, both the fourth switching transistor S4 and the sixth switching transistor S6 are in a turn-off state. Then, the control module 24 may control the PWM4 to be at a high level when determining that the terminal voltage VS4 of the fourth switching transistor S4 is zero (that is, at a moment t4 shown in the figure). In this case, the fourth switching transistor S4 is turned on. That is, zero level turn-on of the fourth switching transistor S4 is implemented. Then, as the first current gradually increases in the second current direction, the control module 24 may control the PWM4 to be at a low level when determining that the direction of the first current is the second current direction and the magnitude is the fourth current value i4 (that is, at a moment t5 shown in the figure). In this case, the fourth switching transistor S4 is turned off. After the fourth switching transistor S4 is turned off, the first level is pulled down until the control module 24 determines that the terminal voltage VS6 of the sixth switching transistor S6 is equal to zero (that is, at a moment t6 shown in the figure). In this case, the control module 24 may control the PWM6 to be at a high level, and turn on the sixth switching transistor S6. After the sixth switching transistor S6 is turned on, the current in the first inductor L1 gradually decreases until the control module 24 determines that the direction of the first current of the first inductor L1 is the first current direction and the magnitude is the third current value i3 (that is, at a moment t7 shown in the figure). In this case, the control module 24 may control the PWM6 to be at a low level, and the circuit returns to a state in which both the fourth switching transistor S4 and the sixth switching transistor S6 are turned off. Then, the control module 24 may continue to repeat control on turn-on or turn-off of the fourth switching transistor S4 and the sixth switching transistor S6.

When the step S705 is performed by using implementation 5, the control module 24 turns on the first switching transistor S1 and the fourth switching transistor S4 when detecting that voltages at two ends of the fourth switching transistor S4 are equal, and then the control module 24 may perform subsequent actions corresponding to implementation 5 and actions of the step S706 and the step S707. Such processing is repeatedly performed until the negative half cycle T2 ends. It should be noted herein that, in the scenario of implementation 5, the second switching transistor S2 and the third switching transistor S3 are turned on, and the fifth switching transistor S5 is turned off. Therefore, in subsequent repeated actions, only the first switching transistor S1, the fourth switching transistor S4, and the sixth switching transistor S6 need to be controlled to be turned on or turned off, and states of other switching transistors should keep unchanged.

For example, continue to refer to FIG. 17. It should be understood that, in the foregoing implementation 5, a waveform of a switching transistor signal (which is assumed to be PWM1 herein) of the first switching transistor S1 is completely the same as that of the control signal PWM4 of the fourth switching transistor S4. In addition, when the second switching transistor S2 and the third switching transistor S3 are turned on, a change waveform of the terminal voltage of the first switching transistor S1 is also the same as that of the terminal voltage of the fourth switching transistor S4. Therefore, FIG. 17 is still used as an example for description herein. In actual implementation, the control module 24 may control the PWM6 to be at a low level, and turn off the sixth switching transistor S6 when determining that the magnitude of the first current is i3 and the direction is the first direction (that is, at a moment t3 shown in the figure). In this case, the first switching transistor S1, the fourth switching transistor S4, and the sixth switching transistor S6 are all in a turn-off state. Then, the control module 24 may control the PW1 and the PWM4 to be at a high level when determining that the terminal voltage VS4 of the fourth switching transistor S4 is zero (that is, at a moment t4 shown in the figure). In this case, the first switching transistor S1 and the fourth switching transistor S4 are turned on. That is, zero level turn-on of the first switching transistor S1 and the fourth switching transistor S4 is implemented. Then, as the first current gradually increases in the second current direction, the control module 24 may control the PW1 and the PWM4 to be at a low level when determining that the direction of the first current is the second current direction and the magnitude is the fourth current value i4 (that is, at a moment t5 shown in the figure). In this case, the first switching transistor S1 and the fourth switching transistor S4 are turned off. After the first switching transistor S1 and the fourth switching transistor S4 are turned off, the first level is pulled down until the control module 24 determines that the terminal voltage VS6 of the sixth switching transistor S6 is equal to zero (that is, at a moment t6 shown in the figure). In this case, the control module 24 may control the PWM6 to be at a high level, and turn on the sixth switching transistor S6. After the sixth switching transistor S6 is turned on, the current in the first inductor L1 gradually decreases until the control module 24 determines that the direction of the first current of the first inductor L1 is the first current direction and the magnitude is the third current value i3 (that is, at a moment t7 shown in the figure). In this case, the control module 24 may control the PWM6 to be at a low level, and the circuit returns to a state in which the first switching transistor S1, the fourth switching transistor S4, and the sixth switching transistor S6 are all turned off. Then, the control module 24 may continue to repeat control on turn-on or turn-off of the first switching transistor S 1, the fourth switching transistor S4, and the sixth switching transistor S6.

When the step S705 is performed by using implementation 6, the control module 24 first turns on the fourth switching transistor S4 when detecting that voltages at two ends of the fourth switching transistor S4 are equal, and then turns on the first switching transistor S1 when another third preset duration dt3 expires. Then, the first switching transistor S1 is turned off when another fourth preset duration dt4 expires. Then, the fourth switching transistor S4 is turned off when it is determined that the first current is equal to the fourth preset current. Then, the control module 24 may continue to perform actions of the step S706 and the step S707. Such processing is repeatedly performed until the negative half cycle T2 ends. It should be noted herein that, in the scenario of implementation 6, the second switching transistor S2 and the third switching transistor S3 are turned on, and the fifth switching transistor S5 is turned off. Therefore, in subsequent repeated actions, only the first switching transistor S 1, the fourth switching transistor S4, and the sixth switching transistor S6 need to be controlled to be turned on or turned off, and states of other switching transistors should keep unchanged.

For example, FIG. 18 is a schematic diagram of another waveform according to an embodiment of this application. Herein, FIG. 18 shows waveforms of control signals (which are respectively PWM1, PWM4, and PWM6) of the first switching transistor S1, the fourth switching transistor S4, and the sixth switching transistor S6, waveforms of terminal voltages (namely, VS4 and VS6) of the fourth switching transistor S4 and the sixth switching transistor S6, and waveforms of the first current of the first inductor L1 after the PCF circuit enters a steady state. It should be understood that FIG. 18 is also described by using an example in which the third voltage value V3 is equal to or greater than half of the first voltage value V1, that is, the third preset current is the first current direction, and the magnitude is i3. In actual implementation, the control module 24 may control the PWM6 to be at a low level, and turn off the sixth switching transistor S6 when determining that the magnitude of the first current is i3 and the direction is the first direction (that is, at a moment t3 shown in the figure). In this case, the first switching transistor S1, the fourth switching transistor S4, and the sixth switching transistor S6 are all in a turn-off state. Then, the control module 24 may control the PWM4 to be at a high level when determining that the terminal voltage VS4 of the fourth switching transistor S4 is zero (that is, at a moment t4 shown in the figure). In this case, the fourth switching transistor S4 is turned on. That is, zero level turn-on of the fourth switching transistor S4 is implemented. Then, when determining that third preset duration dt3 expires (that is, it is determined that a moment t8 expires, and a difference between the moment t8 and the moment t4 is the third preset duration dt3), the control module may control the PWM1 to be at a high level, and turn on the first switching transistor S1. In this case, VS4 is zero, and therefore, zero level turn-on of the first switching transistor S1 is implemented. Then, when determining that fourth preset duration dt4 expires (that is, it is determined that a moment t9 expires, and a difference between the moment t9 and the moment t8 is the fourth preset duration dt3), the control module may control the PWM1 to be at a low level, and turn off the first switching transistor S1. In this case, VS4 is still zero, and therefore, zero level turn-off of the first switching transistor S1 is implemented. Then, as the first current gradually increases in the second current direction, the control module 24 may control the PWM4 to be at a low level when determining that the direction of the first current is the second current direction and the magnitude is the fourth current value i4 (that is, at a moment t5 shown in the figure). In this case, the fourth switching transistor S4 is turned off. After the fourth switching transistor S4 is turned off, the first level is pulled down until the control module 24 determines that the terminal voltage VS6 of the sixth switching transistor S6 is equal to zero (that is, at a moment t6 shown in the figure). In this case, the control module 24 may control the PWM6 to be at a high level, and turn on the sixth switching transistor S6. After the sixth switching transistor S6 is turned on, the current in the first inductor L1 gradually decreases until the control module 24 determines that the direction of the first current of the first inductor L1 is the first current direction and the magnitude is the third current value i3 (that is, at a moment t7 shown in the figure). In this case, the control module 24 may control the PWM6 to be at a low level, and the circuit returns to a state in which the first switching transistor S1, the fourth switching transistor S4, and the sixth switching transistor S6 are all turned off. Then, the control module 24 may continue to repeat control on turn-on or turn-off of the first switching transistor S1, the fourth switching transistor S4, and the sixth switching transistor S6.

It should be noted that each preset parameter (for example, the first preset moment t1, the first preset duration dt1, and the first preset current) in this embodiment of this application may be specifically an empirical value obtained by performing a plurality of tests on the PFC circuit provided in this application. Specific values of these preset parameters are not limited in this application.

It should be further noted that, because of a bidirectional current characteristic of each component in the PFC circuit 20, the PFC circuit 20 may further perform inversion and voltage bucking on an input direct current with a second voltage value Vout, to output an alternating current whose effective value is a first voltage value Vin. Specific control logic is the same as that described above, and is not described herein again.

In this embodiment of this application, regardless of whether in a positive half cycle or a negative half cycle of an alternating current, the control module 24 in the PFC circuit can implement zero voltage switching of one or more switching transistors in any single-phase correction circuit included in the control module 24. In this way, a switching loss and a turn-on loss of the PFC circuit can be significantly reduced, and performance of the PFC circuit can be effectively improved.

A person of ordinary skill in the art may be aware that, in combination with the examples described in embodiments disclosed in this specification, units and algorithm steps can be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

In conclusion, the foregoing descriptions are merely examples of embodiments of the technical solutions of this application, but are not intended to limit the protection scope of this application. Any modification, equivalent replacement, or improvement made without departing from the spirit and principle of this application shall fall within the protection scope of this application.

## Claims

1. A power factor correction PFC circuit control method, wherein a PFC circuit comprises an alternating current module, a power factor correction module, a direct current module, and a control module;
the power factor correction module comprises a three-phase correction circuit connected in parallel, and any single-phase correction circuit in the three-phase correction circuit comprises at least a first inductor, a first bridge arm, a second bridge arm, a third bridge arm, and a fourth bridge arm; and
one end of the first inductor is connected to a single-phase input/output terminal of the alternating current module, the other end of the first inductor is connected to a first bridge arm midpoint of the first bridge arm, the first bridge arm is connected in parallel to the second bridge arm, a first parallel connection point between the first bridge arm and the second bridge arm is connected to one end of the third bridge arm, the other end of the third bridge arm is connected to a positive bus of the direct current module, a second parallel connection point between the first bridge arm and the second bridge arm is connected to one end of the fourth bridge arm, the other end of the fourth bridge arm is connected to a negative bus of the direct current module, and a midpoint or an imaginary midpoint of the alternating current module is further connected to a second bridge arm midpoint of the second bridge arm and the direct current module; and
the method comprises:
determining, by the control module, that an alternating current on the single-phase input/output terminal is in a positive half cycle;
turning on or turning off, by the control module, switching transistors on the first bridge arm and the second bridge arm, to boost a first voltage at the first parallel connection point; and
turning on, by the control module, a switching transistor on the third bridge arm when determining that a boosted first voltage is equal to a voltage of the positive bus of the direct current module.

2. The method according to claim 1, wherein the first bridge arm comprises a first switching transistor and a second switching transistor, the second bridge arm comprises a third switching transistor and a fourth switching transistor, the third bridge arm comprises a fifth switching transistor, and the fourth bridge arm comprises a sixth switching transistor; and
the first bridge arm midpoint is a connection point between a first end of the first switching transistor and a second end of the second switching transistor, the first parallel connection point is a connection point between a second end of the first switching transistor and a first end of the third switching transistor, the second parallel connection point between the first bridge arm and the second bridge arm is a connection point between the second end of the second switching transistor and a first end of the fourth switching transistor, the second bridge arm midpoint is a connection point between a second end of the third switching transistor and a second end of the fourth switching transistor, a first end of the fifth switching transistor is connected to the first parallel connection point, a second end of the fifth switching transistor is connected to the positive bus, a first end of the sixth switching transistor is connected to the second parallel connection point, and a second end of the sixth switching transistor is connected to the negative bus.

3. The method according to claim 2, wherein after the control module turns on the fifth switching transistor, the method further comprises:
turning off, by the control module, the fifth switching transistor if determining that a current of the first inductor is equal to a first preset current.

4. The method according to claim 2 or 3, wherein the first switching transistor is turned on in the positive half cycle, and the turning on or turning off, by the control module, switching transistors on the first bridge arm and the second bridge arm, to boost a first voltage at the first parallel connection point comprises:
turning on, by the control module, the third switching transistor when determining that a first preset moment expires or determining that a voltage at the first parallel connection point is equal to a voltage at the second bridge arm midpoint; and
turning off, by the control module, the third switching transistor when determining that the current of the first inductor is equal to a second preset current, to boost the first voltage at the first parallel connection point.

5. The method according to claim 2 or 3, wherein the first switching transistor and the fourth switching transistor are turned on in the positive half cycle, and the turning on or turning off, by the control module, switching transistors on the first bridge arm and the second bridge arm, to boost a first voltage at the first parallel connection point comprises:
turning on, by the control module, the second switching transistor and the third switching transistor when determining that a first preset moment expires or determining that a voltage at the first parallel connection point is equal to a voltage at the second bridge arm midpoint; and
turning off, by the control module, the second switching transistor and the third switching transistor when determining that the current of the first inductor is equal to a second preset current, to boost the first voltage at the first parallel connection point.

6. The method according to claim 2 or 3, wherein the first switching transistor and the fourth switching transistor are turned on in the positive half cycle, and the turning on or turning off, by the control module, switching transistors on the first bridge arm and the second bridge arm, to boost a first voltage at the first parallel connection point comprises:
turning on, by the control module, the third switching transistor when determining that a first preset moment expires or determining that a voltage at the first parallel connection point is equal to a voltage at the second bridge arm midpoint;
turning on, by the control module, the second switching transistor when determining that first preset duration expires, wherein a start moment of the first preset duration is a turn-on moment of the third switching transistor;
turning off, by the control module, the second switching transistor when determining that second preset duration expires, wherein a start moment of the second preset duration is a turn-on moment of the second switching transistor; and
turning off, by the control module, the third switching transistor when determining that the current of the first inductor is equal to a second preset current, to boost the first voltage at the first parallel connection point.

7. The method according to any one of claims 2 to 6, wherein the method further comprises:
determining, by the control module, that the alternating current on the single-phase input/output terminal is in a negative half cycle;
turning on or turning off, by the control module, the switching transistors on the first bridge arm and the second bridge arm, to buck a second voltage at the second parallel connection point; and
turning on, by the control module, the sixth switching transistor when determining that a bucked second voltage is equal to a voltage of the negative bus of the direct current module.

8. The method according to claim 7, wherein after the control module turns on the sixth switching transistor, the method further comprises:
turning off, by the control module, the sixth switching transistor when determining that the current of the first inductor is equal to a third preset current.

9. The method according to claim 7 or 8, wherein the second switching transistor is turned on in the negative half cycle, and the turning on or turning off, by the control module, the switching transistors on the first bridge arm and the second bridge arm, to buck a second voltage at the second parallel connection point comprises:
turning on, by the control module, the fourth switching transistor when determining that a second preset moment expires or determining that a voltage at the second parallel connection point is equal to the voltage at the second bridge arm midpoint; and
turning off, by the control module, the fourth switching transistor when determining that the current of the first inductor is equal to a fourth preset current, to buck the second voltage at the second parallel connection point by using the first inductor.

10. The method according to claim 7 or 8, wherein the second switching transistor and the third switching transistor are turned on in the negative half cycle, and the turning on or turning off, by the control module, the switching transistors on the first bridge arm and the second bridge arm, to buck a second voltage at the second parallel connection point comprises:
turning on, by the control module, the first switching transistor and the fourth switching transistor when a second preset moment expires or a voltage at the second parallel connection point is equal to the voltage at the second bridge arm midpoint; and
turning off, by the control module, the first switching transistor and the fourth switching transistor when determining that the current of the first inductor is equal to a fourth preset current, to buck the second voltage at the second parallel connection point.

11. The method according to claim 7 or 8, wherein the second switching transistor and the third switching transistor are turned on in the negative half cycle, and the turning on or turning off, by the control module, the switching transistors on the first bridge arm and the second bridge arm, to buck a second voltage at the second parallel connection point comprises:
turning on, by the control module, the fourth switching transistor when determining that a second preset moment expires or determining that a voltage at the second parallel connection point is equal to the voltage at the second bridge arm midpoint;
turning on, by the control module, the first switching transistor when determining that third preset duration expires, wherein a start moment of the third preset duration is a turn-on moment of the fourth switching transistor;
turning off, by the control module, the first switching transistor when determining that fourth preset duration expires, wherein a start moment of the fourth preset duration is a turn-on moment of the first switching transistor; and
turning off, by the control module, the fourth switching transistor when determining that the current of the first inductor is equal to a fourth preset current, to buck the second voltage at the second parallel connection point by using the first inductor.

12. A PFC circuit, wherein the PFC circuit comprises an alternating current module, a power factor correction module, a direct current module, and a control module;
the power factor correction module comprises a three-phase correction circuit connected in parallel, any phase correction circuit in the three-phase correction circuit comprises at least a first inductor, a first bridge arm, a second bridge arm, a third bridge arm, and a fourth bridge arm, one end of the first inductor is connected to a first phase terminal of the alternating current module, the other end of the first inductor is connected to a first bridge arm midpoint of the first bridge arm, the first bridge arm is connected in parallel to the second bridge arm, a first parallel connection point between the first bridge arm and the second bridge arm is connected to one end of the third bridge arm, the other end of the third bridge arm is connected to a positive bus of the direct current module, a second parallel connection point between the first bridge arm and the second bridge arm is connected to one end of the fourth bridge arm, the other end of the fourth bridge arm is connected to a negative bus of the direct current module, a midpoint or an imaginary midpoint of the alternating current module is further connected to a second bridge arm midpoint of the second bridge arm and the direct current module, and the first bridge arm, the second bridge arm, the third bridge arm, and the fourth bridge arm each comprise one or more switching transistors;
the control module is configured to control turn-on or turn-off of the switching transistors in the first bridge arm, the second bridge arm, the third bridge arm, and the fourth bridge arm; and
the power factor correction module is configured to convert a three-phase alternating current provided by the alternating current module into a direct current and transmit the direct current to the direct current module, or configured to convert a direct current provided by the direct current module into a three-phase alternating current and transmit the three-phase alternating current to the alternating current module.

13. The PFC circuit according to claim 12, wherein the first bridge arm comprises a first switching transistor and a second switching transistor connected in series, the second bridge arm comprises a third switching transistor and a fourth switching transistor connected in series, the third bridge arm comprises a fifth switching transistor, and the fourth bridge arm comprises a sixth switching transistor; and
the first bridge arm midpoint of the first bridge arm is a connection point between a first end of the first switching transistor and a second end of the second switching transistor, the first parallel connection point is a connection point between a second end of the first switching transistor and a first end of the third switching transistor, the second parallel connection point between the first bridge arm and the second bridge arm is a connection point between the second end of the second switching transistor and a first end of the fourth switching transistor, the second bridge arm midpoint of the second bridge arm is a connection point between a second end of the third switching transistor and a second end of the fourth switching transistor, a first end of the fifth switching transistor is connected to the first parallel connection point, a second end of the fifth switching transistor is connected to the positive bus, a first end of the sixth switching transistor is connected to the second parallel connection point, and a second end of the sixth switching transistor is connected to the negative bus.

14. The PFC circuit according to claim 12 or 13, wherein the control module comprises a controller and a current detection unit;
the controller is connected to control ends of the switching transistors in the first bridge arm, the second bridge arm, the third bridge arm, and the fourth bridge arm, the controller is connected to the current detection unit, and the current detection unit is further connected to one end of the first inductor;
the current detection unit is configured to detect a current of the first inductor, and transmit a corresponding current detection result to the controller; and
the controller is configured to control turn-on or turn-off of the switching transistors in the first bridge arm, the second bridge arm, the third bridge arm, and the fourth bridge arm based on the current detection result.

15. The PFC circuit according to any one of claims 12 to 14, wherein the control module further comprises a voltage detection unit;
the controller is connected to the voltage detection unit, and the voltage detection unit is further separately connected to two ports other than the control end of any switching transistor in the first bridge arm, the second bridge arm, the third bridge arm, and the fourth bridge arm;
the voltage detection unit is configured to detect a voltage between the two ports other than the control end of the any switching transistor, and transmit a corresponding voltage detection result to the controller; and
the controller is configured to control turn-on or turn-off of the switching transistors in the first bridge arm, the second bridge arm, the third bridge arm, and the fourth bridge arm based on the voltage detection result.

16. The method according to any one of claims 12 to 15, wherein the direct current module further comprises a first capacitor and a second capacitor; and
a first end of the first capacitor and a first end of the second capacitor are connected to the midpoint or the imaginary midpoint of the alternating current module, a second end of the first capacitor is connected to the positive bus, and a second end of the second capacitor is connected to the negative bus.

17. A three-phase power supply system, wherein the three-phase power supply system comprises a three-phase alternating current source, the PFC circuit according to any one of claims 12 to 16, a DC/DC converter, and a direct current load;
the three-phase alternating current source is connected to an input side of the PFC circuit, an output side of the PFC circuit is connected to an input side of the DC/DC converter, and an output side of the DC/DC converter is connected to the direct current load; and
the three-phase alternating current source is configured to provide a three-phase alternating current, the PFC circuit is configured to convert the three-phase alternating current into a direct current with a first voltage value, and the DC/DC converter is configured to convert the direct current with the first voltage value into a direct current with a second voltage value, and transmit the direct current with the second voltage value to the direct current load.
